# EUROPEAN PATENT APPLICATION

(11) **EP 4 142 174 A1**
(43) Date of publication of application: **01.03.2023**
(21) Application number: 21193626.5
(22) Date of filing: 27.08.2021
(51) Int. Cl.: H04B 7/026, H04B 7/06, H04B 7/08, H04W 48/16, H04B 7/155

(54) **RECONFIGURABLE RELAY DISCOVERY FOR BLINDSPOT AVOIDANCE**

(71) Applicant: Koninklijke Philips N.V., 5656 AE Eindhoven (NL)
(72) Inventor: WALKER, Nicholas, Eindhoven (NL); BEARD, Timothy, Eindhoven (NL); DIJK, Esko Olavi, Eindhoven (NL); GARCIA MORCHON, Oscar, Eindhoven (NL); CRONIN, Harry Michael, Eindhoven (NL); DEES, Walter, Eindhoven (NL)
(74) Representative: Philips Intellectual Property & Standards

(57) **Abstract**

The invention proposes a system and method for determining and controlling a reconfigurable relay device (e.g., a reconfigurable intelligent surface, RIS, or a smart repeater), wherein the reconfigurable relay device is registered and a wireless communication path is established from a network (e.g. access device) via the reconfigurable relay device to a terminal device. The network registers the reconfigurable relay device and determines parameters needed for its control. The control may be achieved by validated and accepted commands and queries. A relay state of the relay device may be set so that a beam for the wireless communication path is correctly redirected at the terminal device.

## Description

### FIELD OF THE INVENTION

The invention relates to the field of communication services for terminal devices including mobile access devices in wireless networks, such as ― but not limited to ― reconfigurable intelligent surfaces (RISs).

### BACKGROUND OF THE INVENTION

Whilst Reconfigurable Intelligent Surfaces (RIS) can be constructed using any technology with the appropriate characteristics (e.g., an ability to redirect, that is, reflect or transmit in different configurations radio waves of the correct frequencies), the predominant technology used is metamaterial surfaces, or "metasurfaces" in short.

Switchable metasurfaces have been recently developed and offer many possibilities for improving a wireless communication path between an access device (e.g., base station or access point) of a wireless network and a terminal device (e.g., user equipment (UE)).

A variety of technologies can be employed to implement such switchable metasurfaces. Generally, electronically switched metasurfaces are employed, but physically moveable reflecting patches are also a viable technology. In general, as long as the general set of desired properties are implemented, there is no reason that these surfaces cannot be constructed by using any relevant technology. Metasurfaces can even be used to form independent communications infrastructures using backscattered ambient radio signals.

Metasurfaces may be composed of periodic subwavelength metal/dielectric antennae that resonantly couple to the electric or magnetic or both components of the incident electromagnetic fields, exhibiting effective electric (represented by electric permittivity ε) and/or magnetic (represented by magnetic permeability µ) responses not found in nature.

Thus, metasurfaces represent a versatile concept for the manipulation of electromagnetic waves. Due to the ease of fabrication using planar circuit manufacturing, there is significant application potential for the microwave frequency range. Huygens metasurfaces have received significant attention as they feature near unity transmission and suppress reflection artifacts efficiently. For microwave frequencies, Huygens metasurfaces are usually manufactured in printed circuit board (PCB) processes with three structured copper layers separated by low-loss dielectric substrates.

Metamaterials will be useful in many aspects of e.g. 5G wireless communication solutions. Syed S. Bukhari et al.: "A Metasurfaces Review: Definitions and Applications*"* provides a review of metasurfaces. Purely passive metasurfaces are useful, but only act as permanent changes to the transmission environment.

A reconfigurable metasurface for mm-wave networks ("mmWall") has been proposed by Kun Woo Cho et al.: "mmWαll: A Reconfigurable Metamaterial Surface for mmWave Networks*",* which is a tunable smart surface made of metamaterial which, unlike a conventional wireless relay system, does not have transmitting and receiving antennas, nor an amplifier. Once the incoming beam hits the metasurface, it naturally refracts the beam into a desired direction, regardless of whether the transmitter and receiver are located in the same room ("mirror" mode) or in a different room ("lens" mode). Also, it can split the incoming signal into multiple beams and concurrently steer the multi-armed beams. The authors used "Huygen's metasurfaces" to implement their design.

There are however other technologies for switchable mm-wave manipulating surfaces apart from metasurfaces.

Furthermore, Large Intelligent Surfaces (LIS) and a model for integration of base stations and LIS to determine the benefits of different proportions of each in a communications network has been disclosed in Yongxu Zhu et al.: "Stochastic Geometry Analysis of Large Intelligent Surface-Assisted Millimeter Wave Networks*".* They concluded that, where there are a limited number of base stations, the contribution of LIS is good, but this is not the case where there are very many base stations serving users.

Moreover, in Jun Zhao et al.: "A Survey of Intelligent Reflecting Surfaces (IRSs): Towards 6G Wireless Communication Networks", the authors term the surfaces "Intelligent Reflecting Surfaces" and the behavior is limited to reflection rather than both reflection and transmission.

### SUMMARY OF THE INVENTION

It is an object of the present invention to enable control and use of solely externally controlled RISs which lack intrinsic capacity to perform their own radio sensing ("fully passive RIS").

This object is achieved by an apparatus as claimed in claim 1, by an access device, by a reconfigurable relay device as claimed in claim 7, by a system as claimed in claim 14, by a method as claimed in claim 15, and by a computer program product

According to a first aspect related to an access device (e.g. base station (gNB) or access point), an apparatus is provided for controlling a communication path in a wireless network, the apparatus comprising:
a registration controller for discovering and registering a reconfigurable relay device in the wireless network;
a path establisher for planning and establishing a wireless communication path to at least one target terminal device via at least one registered reconfigurable relay device; and
a state controller for controlling a redirection pattern of the at least one reconfigurable relay device in accordance with the established wireless communication path.

According to a second aspect related to the access device (e.g. base station (gNB) or access point), a method is provided for controlling a communication path in a wireless network, the method comprising:
discovering and registering a reconfigurable relay device in the wireless network;
planning and establishing a wireless communication path to at least one target terminal device via at least one registered reconfigurable relay device; and
controlling a redirection pattern of the at least one reconfigurable relay device in accordance with the established wireless communication path.

According to a third aspect, a reconfigurable relay device (e.g. an RIS or a smart repeater) is provided, which is configured to control a redirection pattern for relaying at least one received wireless signal in response to a relay state command received from a remote controller device of a wireless network to establish a wireless communication path to a target terminal device, wherein the reconfigurable relay device can be set to one of a plurality of configuration states in response to the relay state command, wherein each of the configuration states results in one of a plurality of redirection patterns of the received wireless signal, and wherein the plurality of redirection patterns comprise at least one of a reflection with a given reflection angle, a focusing or defocusing, a generation of multiple beams, a refraction with a given refraction angle, and an absorption.

According to a fourth aspect, an access device is provided, which comprises the apparatus of the first aspect.

According to a fifth aspect, a system is provided, which comprises at least one access device of the fourth aspect, at least one reconfigurable relay device of the third aspect, and a relay installation database for storing information about installed reconfigurable relay devices.

Finally, according to a sixth aspect, a computer program product is provided, which comprises code means for producing the steps of the method of the second aspect when run on a computer device.

The proposed path establishment via at least one reconfigurable relay device offers significant benefits for radio communication systems, particularly those using high frequencies such as 5G mm-wave. This is because such frequencies are readily absorbed by many materials and thus blind spots are more common with these systems.

A scenario for installation of an RIS is that an owner of a building wants to improve reception quality of wireless communications, e.g., 5G based, within the building. The occupants of the building might be his/her own staff, an Industrial Internet of Things (IIoT) network or possibly the general public (e.g., in a public building). More likely, the owner might wish to improve reception on all wireless communication networks supplying individuals in the building. Therefore, it may be desirable that the surfaces are used by all networks to improve communications with the people inside the building. Therefore, the owners of the devices would wish to enable them to be integrated with the operations of the wireless communication, e.g., 5G based, network operators.

A priority ordering of networks might be determined, for example by the statistics of the networks supplying users within that building. Moreover, several networks might be given paid access to the RIS, possibly setting priorities on use of the RIS according to an auction or fixed fee charged for 1st place, 2nd place etc within the user priority list.

Systems with reconfigurable relay devices such as RISs or smart repeaters are likely to be significantly cheaper than additional base stations. The proposed reconfigurable relay devices are "passive" in the sense that they are controlled by an external controller, most likely a core network device or an access device (e.g., base station) performing the search for communication paths. It is possible to integrate some form of radio sensing and internal control into these systems, whereby the reconfigurable relay device becomes responsible for setting its state based on e.g. beam search to the target terminal device.

Specifically, the following advantages can be achieved:
- Installed reconfigurable relay devices or systems can be setup to be controlled by one or more networks in a way which enables their valid and secure operation in communication systems, and which handles edge cases such as non-operation of a reconfigurable relay system.
- The operation of multiple networks seeking to use a single reconfigurable relay device at the same time in setting up communication paths can be handled.
- Means can be provided for rapid calculation of a radio frequency (RF) communication signal path via such a reconfigurable relay device from an access device to a terminal device.
- Additional independent communication paths can be established, for example two users located in the same direction from the access device can be served on the same frequency by beam forming directly towards one and beam forming via a reconfigurable relay device to the other, or for two access devices beaming towards two users respectively, for one to use a path via the reconfigurable relay device (even though there is a direct line of sight (LoS) to that user) to again avoid interference if that LoS path would impact the other user and the relay-directed path would not.

Accordingly, newly installed reconfigurable relay systems can be registered such that the network or access device has an ability to command them to desired states, including discovery methods if a formal registration process for the reconfigurable relay device is not available. This allows discovery, setup and ongoing operation of the control of a fully passive reconfigurable relay device by the network or its access devices. Moreover, competition over control of purely passive reconfigurable relay device between different networks and/or network operators is allowed. Even when a reconfigurable relay device is formally registered (by itself or by its owner) in a database, the access device may still need to discover or try out that reconfigurable relay device if it is reachable from the access device and whether it can help to establish useful communication paths to terminal devices.

Additionally, the proposed solution provides an optimum approach to finding a communication path to a user via a reconfigurable relay device, given that the access device (e.g., base station) provides a potentially large number of beam formed directions, only a few of which interact with the reconfigurable relay device, and that there may be a very large number of states for the reconfigurable relay device, most of which result in no communication path to the terminal device or there may be very many individual elements in a reconfigurable relay device so that checking through each element is not feasible.

Furthermore, queries and commands to the reconfigurable relay systems can be formatted and sent to support their use in communication with end users where the command/query communication meets security and acceptability requirements (e.g., the network has appropriate priority and authorization for use of a reconfigurable relay device if required).

Moreover, the proposed system can be applied in outdoor and indoor environments as well. A likely scenario may be the improvement of connectivity outdoors, e.g., in city scenarios where due to buildings, cars, etc. the reception quality might not be as good as desirable. In this scenario, RISs installed in the city environment, e.g., in building facades, billboards, etc. are used by network operators to improve network connectivity and services.

According to a first option which may be combined with any of the above first to sixth aspects, the reconfigurable relay device may be looked up (e.g. by the registration controller) in a relay installation database and a required registration method may be queried from the relay installation database or the reconfigurable relay device, or the reconfigurable relay device may be discovered by using autodiscovery in a locality method where local transmission paths with variable properties are noted. Thereby, path establishment can be adapted to new network configurations to ensure optimal communication paths.

According to a second option which may be combined with the first option or any of the above first to sixth aspects, the path establishment may be configured to apply a transmission modelling within a local radio transmission model of a local environment to search for suitable beam paths, or to use results of previous beam directions plus relay states and UE locations stored in a database, or to use an artificial intelligence model for learning a relation or association between beam settings and parameters, relay states of nearby reconfigurable relay devices and/or UE location(s) as input parameters and link quality and/or performance to the target terminal device as output parameters. Thus, communication paths which include relevant reconfigurable relay systems can be planned, avoiding exhaustive real-world search through beam directions of access devices and relay states.

According to a third option which can be combined with the first or second option or any of the above first to sixth aspects, the redirection pattern applied to at least one beam on the wireless communication path may be controlled by using a scheduling request. Thereby, scheduling considerations for future configuration states of the reconfigurable relay device can be added to the control actions.

According to a fourth option which can be combined with any of the first to third options or any of the above first to sixth aspects, a timing advance can be applied in path establishment to compensate for a longer transmission path length via the reconfigurable relay device. This measure ensures that reception times at the target terminal device can be properly controlled.

According to a fifth option which can be combined with any of the first to fourth options or any of the above first to sixth aspects, the reconfigurable relay device may be queried to determine a current configuration state. Thereby, current redirection patterns of the reconfigurable relay device can be considered in the path planning and establishment process.

According to a sixth option which can be combined with any of the first to fifth options or any of the above first to sixth aspects, the reconfigurable relay device may be a reconfigurable intelligent surface or other switchable metamaterial surface or a smart repeater. Thus, switchable metamaterial surfaces and/or reconfigurable intelligent surfaces can be combined with smart repeaters or they can be selected for achieving an optimized network environment.

According to a seventh option which can be combined with any of the first to sixth options or any of the above first to sixth aspects, the reconfigurable relay device may comprise metadata including at least one of information required for deriving capabilities of the reconfigurable relay device and its control by a network, location and/or orientation information, a set of configuration states, a default configuration state, a reconfiguration speed, authentication, control and query methods, and a network control prioritization procedure. This option increases efficiency of path planning and establishment by providing a variety of initial information.

According to an eighth option which can be combined with any of the first to seventh options or any of the above first to sixth aspects, the reconfigurable relay device may comprise current information data including at least one of a current relay state indicating a currently set configuration state, a current user priority parameter(e.g. priority number) which is set to a priority of a current user, a first flag indicating if the current relay state is being currently commanded, a timer value indicating for how long the current relay state has been commanded, and a second flag indicating an out of operation state. This option increases efficiency of path planning and establishment by providing enhanced information about the current state of the reconfigurable relay device. For example, it can be determined whether a registered reconfigurable relay device is no longer functional, so that it can be removed from the possible communication paths with end users.

According to a ninth option which can be combined with any of the first to eighth options or any of the above first to sixth aspects, the reconfigurable relay device may comprise at least one sensor for obtaining a location and/or orientation of the reconfigurable relay device. Thereby, the reconfigurable relay device can obtain direct information about its location and/or orientation, which may be signaled to a database, or (directly/indirectly) to a controlling access device that can use it for path planning.

According to a tenth option which can be combined with any of the first to ninth options or any of the above first to sixth aspects, the reconfigurable relay device may comprise a network usage log which stores information about usage times of the relay device. This log information can be used to derive usage information for evaluating efficiency and/or proper placing of the reconfigurable relay device.

According to an eleventh option which can be combined with any of the first to tenth options or any of the above first to sixth aspects, the reconfigurable relay device may comprise a priority list for storing priorities of networks or devices that control the reconfigurable relay device, wherein the reconfigurable relay device is configured to compare a new priority of a new remote controller or a new controlling network with a current priority of a current remote controller or a currently controlling network and if the new priority is higher, the reconfigurable relay device ceases the control by the current remote controller or the current network and allows control by the new remote controller or new network. This provides the advantage that priority considerations can be included in path planning and scheduling based on urgency or importance of a communication path. Moreover, a network prioritization scheme can be used to prevent deadlock in the control of a reconfigurable relay device by multiple competing users.

According to a twelfth option which can be combined with any of the first to eleventh options or any of the above first to sixth aspects, the reconfigurable relay device may comprise a scheduler for scheduling configuration states requested by one or more networks or devices and for determining whether a requested configuration state can be accepted or not. Thereby, multiple networks and/or access devices can use the reconfigurable relay device in parallel and total transmission time can be reduced by scheduling same configuration states at same time periods. Additionally, transmissions can be planned in advance (e.g., recurring transmissions), or e.g. in cases where new data for transmission is expected shortly, a pre-scheduled time slot for use of the RIS can be faster than trying to negotiate a RIS at the time of the next transmission.

According to a thirteenth option which can be combined with any of the first to twelfth options or any of the above first to sixth aspects, the reconfigurable relay device may be configured to use a device-to-device communication for communicating with the target terminal device. This provides the advantage of fast direct communication to the target terminal device for efficient path establishment.

According to a fourteenth option which can be combined with any of the first to thirteenth options or any of the above first to sixth aspects, the reconfigurable relay device may be configured to provide a random state cycling where configuration states are randomly changed, or to redirect incident waves or beams towards a predetermined fixed direction, or to enter a configuration state as a metamaterial absorber. Thereby, security can be enhanced, as the reconfigurable relay device can enter a configuration state where it can no longer be used e.g. by networks without permission.

It is noted that the above apparatus may be implemented based on discrete hardware circuitries with discrete hardware components, integrated chips, or arrangements of chip modules, or based on signal processing devices or chips controlled by software routines or programs stored in memories, written on a computer readable media, or downloaded from a network, such as the Internet.

It shall be understood that the apparatus of claim 1, the access device of claim 7, the reconfigurable relay device of claim 8, the system of claim 18, the method of claim 19, and the computer program product of claim 20 may have similar and/or identical preferred embodiments, in particular, as defined in the dependent claims.

It shall be understood that a preferred embodiment of the invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
- Fig. 1 schematically shows a summarizing architecture of an RIS registration and control system according to various embodiments;
- Fig. 2 schematically shows a flow diagram of an RIS registration and control method according to various embodiments;
- Fig. 3 schematically shows an RIS discovery and registration process according to an embodiment with RIS installation database;
- Fig. 4 schematically shows an RIS discovery and registration process according to an embodiment with RIS request for registration;
- Fig. 5 schematically shows an RIS discovery and registration process according to an embodiment with autodiscovery;
- Fig. 6 schematically shows an RIS query and command process according to an embodiment;
- Fig. 7 schematically shows a network control prioritization process according to an embodiment;
- Fig. 8 schematically shows a communication path establishment process according to an embodiment with exhaustive search;
- Fig. 9 schematically shows a communication path establishment process according to an embodiment with beam path memory;
- Fig. 10 schematically shows a failure recognition process according to an embodiment;
- Fig. 11 schematically shows a flow diagram of a process for an RIS enabled communication according to various embodiments;
- Fig. 12 schematically shows a first example of an improved beam steering process according to an embodiment; and
- Fig. 13 schematically shows a second example of an improved beam steering process according to an embodiment.

### DETAILED DESCRIPTION OF EMBODIMENTS

Embodiments of the present invention are now described based on a 5G cellular network environment.

Throughout the present disclosure, the abbreviation "gNB" (5G terminology) or "BS" (base station) is intended to mean access device such as a cellular base station or a WiFi access point. The gNB may consist of a centralized control plane unit (gNB-CU-CP), multiple centralized user plane units (gNB-CU-UPs) and/or multiple distributed units (gNB-DUs). The gNB is part of a radio access network (RAN), which provides an interface to functions in the core network (CN). The RAN is part of a wireless communication network. It implements a radio access technology (RAT). Conceptually, it resides between a communication device such as a mobile phone, a computer, or any remotely controlled machine and provides connection with its CN. The CN is the communication network's core part, which offers numerous services to customers who are interconnected via the RAN. More specifically, it directs communication streams over the communication network and possibly other networks.

Furthermore, the terms "base station" (BS) and "network" are often used as synonyms in this disclosure. This means for example that when it is written that the "network" performs a certain operation it may be performed by a CN function of a cellular network, or by a specific base station that is part of such cellular network, and vice versa. It can also mean that part of the functionality is performed by the cellular network and part of the functionality by the base station.

Additionally, the term "validation" is intended to refer to a process or act that may include typical information technology (IT) security operations such as decryption, signature checking, authentication, authorization etc.

A wide range of names have been given to (large area) surfaces which can passively alter the direction of radio waves impacting on them, but these reflection or transmission properties can be changed and/or switched and/or reconfigured to result in different passive behavior according a "state" they have been set to. These names include intelligent reflective surface (IRS), reconfigurable intelligent surface (RIS), large intelligent surface (LIS), reconfigurable metasurface (RM), programmable metasurface (PM), large intelligent metasurface (LIM), smart reflect-arrays (SRA), software-defined metasurface (SDM), software-defined surface (SDS), passive intelligent surface (PIS), and passive intelligent mirror (PIM).

These surfaces may be switchable between different states, where each state reflects or transmits the radio waves in a different way. A difference existing within these types of surfaces is that some have an intrinsic ability to determine signal strengths, for example they include an ability of a receiver as well as a reflector/transmitter, and therefore can act as an independent "relay-like" system, for example performing their own beam path search (albeit with reflected/transmitted signals originating elsewhere). Their similarity to relays enables them to be integrated into communication standards, e.g., cellular standards, as such.

Such switchable metamaterial surfaces offer many possibilities for improving the communication path between a base station or other type of access device and a terminal device (e.g., UE).

In the following, the term "reconfigurable intelligent surface" or "RIS" will be used to refer to any of the above surface types. In embodiments, it may be assumed that arrays of RISs are fully passive, that is, they have no intrinsic radio sensing capabilities and therefore cannot themselves perform beam search or similar but can be defined by switching states when commanded to by an external controller and it is the responsibility of the external controller to determine the appropriate state to set the RIS to.

It is noted that throughout the present disclosure only those blocks, components and/or devices that are relevant for the proposed data distribution function are shown in the accompanying drawings. Other blocks have been omitted for reasons of brevity. Furthermore, blocks designated by same reference numbers are intended to have the same or at least a similar function, so that their function is not described again later.

The following embodiments allow for enhanced network control for a wireless communication involving an access device (e.g., base station (BS)), RIS and terminal device (e.g., UE).

More specifically, RISs are seamlessly integrated into a 5G network via maintenance by a BS (e.g., gNB in 5G terminology) of a 3D transmission database of the local area, may include both buildings and objects, which database may include all known RISs and their properties (including operations of RISs and means of controlling them). A resulting 3D radio propagation model may be used, along with some limited local search, for selection of communication channels including both the BS beam direction(s) and the states of the RISs controlled by the network and/or BS.

The database may be enhanced by automatic discovery of user-installed RISs (metasurfaces) within the range of coverage. The RISs can be autodiscovered based on an unexpected measured strength of signals between the BS and a UE (or between two or more BSs), where that would not be expected based on the previous iteration of the 3D transmission database (e.g. a 3D area map) and UE reported and/or estimated location. If the properties of the surface are noted to be different at different times, this may be flagged as reconfigurable. When the BS suspects that a new RIS may have been discovered, it can look up the surface and its properties (and perhaps price for use) in a registration database, and if it is found there, the BS may request control capabilities (e.g., from the owner of the RIS) and integrate it (and its properties and control) into the 3D transmission database (e.g., an updated 3D area map).

During usage, the BS performs an analysis of the communication required, the locations of users, and the predictions from its 3D radio propagation model, then the BS uses its beam forming capabilities and actively switches the behavior of the RISs under its control to maximize communications quality and/or throughput whilst minimizing the transmission power levels.

The following embodiments cover a registration process, an RIS query and command process, a communication path establishment method from the BS, via the RIS to the UE, a network control prioritization process on command originators, and an RIS failure recognition process.

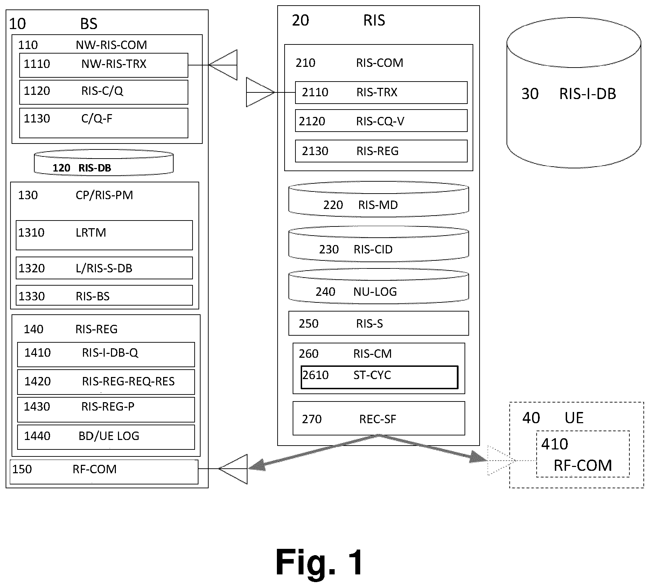

Fig. 1 schematically shows a summarizing architecture (with optional elements and functions) of an RIS registration and control system according to various embodiments.

The proposed system for a RIS enabled communication comprises base stations (BS) 10, at least one passive reconfigurable intelligent surface (RIS) 20 and terminal devices (UE) 40 of user.

The RIS-controlling base station 10 comprises an RF communication capability (RF-COM) 150 according to the involved communication standard (e.g., 5G NR) and a network to RIS communication system (NW-RIS-COM) 110 as a means of sending and receiving communications to/from the RIS 20, which may simply be communications to the RIS 20 using its standard communication facilities, e.g., based on the F1-C interface, or may include messages sent to a specified Internet address. It includes a BS to RIS transmission and reception system (NW-RIS-TRX) 1110, an RIS query and command capability (RIS-C/Q) 1120, and a command/query formatting for validation procedure (C/Q-F) 1130.

The UE 40 comprises an RF communication capability (RF-COM) 410 for enabling communication with the BS 10 according to the involved communication standard (e.g., 5G NR).

Furthermore, the BS 10 comprises an RIS database (RIS-DB) 120 containing a list of local RISs and their metadata and optionally the BS beam direction to target each RIS. It might just store beam directions to target each specific RIS. Optionally, the metadata sourced from the RIS 20 may be extended to include aspects of its performance as determined by the network or BS 10, such as its optimal beam direction, availability, utility in communication, changes in performance according to weather and time of year etc.

The RIS database 120 may be divided into RIS information which is general to a network controlling many local BSs and information which is specific to individual BSs. For example, access to a specific RIS may be negotiated for a network operator by any of its BSs and certain information may be generic for that RIS to all BSs. However, the ability to use a specific RIS may differ between the individual BSs, for example an RIS may become obscured for one BS but not for another.

Additionally, the BS 10 comprises a communication path including RIS planning module (CP/RIS-PM) 130 including at least one of:
- An optional local radio transmission model (LRTM) 1310 of its local environment, including the presence and behavior of any RISs which can be used to identify a correct configuration of a BS beam direction, selection of RIS and RIS state to communicate with a UE at a defined location. Optionally, the performance of the RIS in the local radio transmission model 1310 may be determined based on the calculated additional RIS database components, such as performance according to weather and time of year.
- An optional database (L/RIS-S-DB) 1320 for storing UE location, RIS and RIS state and linking a specific RIS, a state setting of that RIS and the location(s) of UEs which were successfully communicated with by the BS 10 using that RIS and RIS state, given one or more UE locations, the identity and location of the RIS (alternatively a beam direction to that RIS), the RIS state associated with past communication via the RIS to that UE location.
- An optional RIS beam search capability (RIS-BS) 1330 for local or global search through the states of an RIS for optimal communication with a UE. The local states may be derived or retrieved from an RIS state topological map included in RIS metadata.

Moreover, the BS 10 comprises an RIS registration capability (RIS-REG) 140, including at least one of:
- An optional RIS installation database querying (RIS-I-DB-Q) function 1410 that provides the ability to query an RIS installation database (RIS-I-DB) 30 to determine new entries in the RIS installation database 30 useable by the RIS controlling network or BS 10 to return means required for negotiating access to an RIS.
- An optional RIS registration request response (RIS-REG-REQ-RES) function 1420 that provides the ability to respond to a communication from an RIS to set up the registration entry as part of the RIS registration process. This may as well be hosted in a network, e.g. the Internet, or a specific operators network in case the RIS is associated to a particular operator.
- An RIS registration process capability (RIS-REG-P) 1430 that provides the ability to negotiate access to a RIS including at least one of negotiating a means of validation, getting control and query access, agreeing a price and pricing method (if any) and a means of getting access to the RIS metadata 220 and entering it into the RIS database 120.
- An optional beam direction and/or UE location log (BD/UE LOG) 1440 which associates beam directions with the location (acquired during communication with the UE 10) of all UEs it has communicated with over some time period. This log 1440 can be analyzed using a beam direction and/or UE location log analysis to identify beam directions with a large variation in UE locations, consistent with an RIS being present in that beam direction. In an example, the locations of UEs may be estimated by the BS 10 for each UE while it communicates with it. In another example, a self-reported UE location may be refined by additional estimates performed by the BS.

Furthermore, the RIS 20 may comprise at least one of the following components or functions:
i. A reconfigurable surface (REC-SF) 270 which may be a multi-element electronically controllable surface which can be set to a number of configuration "states" each of which result in a different redirection pattern of radio waves of the frequencies associated with the communication. Such redirection could include at least one of:
   - reflection with a given reflection angle;
   - transmission;
   - focusing or defocusing;
   - generation of multiple beams;
   - refraction with a given refraction angle (this option can be important to allow for communications, e.g., within a building); and
   - absorption (this option can be used to reduce noise, and/or isolate a given environment).
ii. An RIS control module (RIS-CM) 260 configured to set the state of the reconfigurable surface 270 when commanded e.g. by the RIS communication module 110 of the BS 10. The RIS control module 260 may store a current state of the reconfigurable surface 270, that is currently set as RIS state. In addition, the RIS control module 260 may comprise an optional state cycling (ST-CYC) ability or function 2610 to perform state cycling on initial power-up, whereby it periodically switches its state to random widely differing states. This behavior may be suppressed when the RIS 20 is successfully registered with one or more networks or this function may continue to be carried out when the RIS 20 is not being commanded, in order to prevent the RIS 20 from being used as a passive surface by BSs. A goal may be to prevent others (e.g. BSs from network operators that do not have a usage agreement with the RIS owner) from using it as a passive surface. Another option is that the RIS 20 keeps changing states and only when the network decides, it configures its state according to the network's needs. Or, the network (e.g. BS 10) controlling the RIS 20 might know the schedule of the RIS states, e.g., the RIS 20 provides the BS 10 with its schedule for the period of time the BS 10 has rented the RIS 20, and use it to pick the right communication time slots to use the RIS when it is in particular desired states.
iii. RIS metadata (RIS-MD) 220, which includes information required for deriving the capabilities of the RIS and its control by a network. This includes at least one of:
   - Location and orientation (e.g., this information may be entered by an installer of the RIS 20 or RIS sensors (RIS-S) 250 that determine the location and 3D orientation and may automatically communicate it e.g. during a registration process);
   - A set of configuration states (e.g., a set of discrete or possibly continuous state values, represented as the way that incident radio waves incoming on the surface at a specific angle are transformed into outgoing radio waves, including direction, focusing etc.; the states may be organized into a topological map (the RIS state topological map) showing which states are "adjacent", i.e., give results, such as beam directions, which are the most similar, to enable performing a local search for an optimal communication path starting from a start RIS state);
   - A default RIS state (e.g., the default state of the surface (the state the RIS 20 sets itself to when there is no commanded state; the RIS 20 will probably default to a specific state either when unpowered or when not commanded to adopt some other state (these may not be the same); the network may need to know this default state, as it is likely to be in this state prior to the network commanding it to some state optimized for communication (unless the RIS 20 is set to perform "state cycling" to prevent its use as a passive surface, in which case it will have a random and changing state));
   - A speed of reconfiguration surface switching (the RISs may be able to switch their state as rapidly as possible, since slow switching would interfere with the ability of a BS to rapidly set up high bandwidth, reliable communications with a UE, in particular, a mobile UE, using that RIS and certainly to search for a communication path by cycling through the states of the RIS; the speed of state switching for the RIS 20 may indicate the number of states it is able to search through in a reasonable time if it is required to search for a communication path; or it may separately indicate a speed or time duration for being commanded from one state to another during operation);
   - Authentication, control and query methods (e.g., a control method by which a signal sent to the surfaces sets them to a specified state (which are one of a set of categorical values or a small number of continuous values); an authentication method, by which a control signal sent to the RIS 20 can be determined to be sent by a valid originator; the authentication method may also ensure the freshness of the command; during the registration process some form of command validation may be established, for example security keys should be exchanged, so that the RIS 20 can in the future determine that any commands sent to it that it enacts actually originate from an authenticated source that has permission to command it);
   - A network control prioritization procedure (e.g., priority allocated to the control of that surface according to the network operator, or BS identity); and
   - Costs (e.g., if there is a cost associated with the control of the RIS 20 (that is charged by the owner of the RIS 20 to a network which controls the RIS 20), then this can be derived by the network e.g. both in terms of quantity and schedule (e.g., pay per use, fixed fee, time-of-day based pricing, etc.)).

In addition, the RIS 20 comprises an RIS communication module (RIS-COM) 210 which can receive commands and queries and return results. The RIS communication module 210 may include at least one of:
- An RIS Transmission and Reception system (RIS-TRX) 2110 which may use the same wireless communication system as the RIS-controlling network (e.g., BS 10), e.g., 5G NR but may include the sending and receiving of messages via other wireless communication systems or via the internet, connected locally using Wifi, Ethernet, Bluetooth or the like. In order to achieve seamless use of these surfaces within the process of communicating with the UE 40, the state switching commands to be communicated with the RIS 20 may be transmitted or routed through the same communication network via which the BS is seeking to set up a communication path to the UE 40. However, other means of communicating with the RIS 20 (e.g., via an internet protocol, via a fixed internet link, Wifi, Bluetooth or the like) can be used, but may introduce a delay in the process of setting up communications with the UE 40.
- An RIS registration capability (RIS-REG) 2130 configured to set up registration of the RIS 20 in the RIS installation database 30.
- An RIS command/query validation and acceptance (RIS-CQ-V) capability 2120 which may including a validated network list (e.g., a list of networks or BSs which have been validated for control of that RIS 20), an optional RIS network priority list (giving e.g. the negotiated priority number of each validated network), an optional additional information needed for acceptance of a command/query from a network (such as a "Network Blacklist"), and an optional capability to initiate registration with one or more networks (e.g. RIS registration request capability).

Further, the RIS 20 comprises RIS current information data (RIS-CID) 230 that may include a current RIS state indicating the configuration state currently set for the reconfigurable surface 270; an optional current user priority number which is set to the priority number of a current user (if not commanded, this flag may be set to zero (NULL)); a currently commanded flag indicating if the current state of the reconfigurable surface 270 is being currently commanded; an optional time during period timer (e.g. a timer and timer value indicating for how long the current state has been commanded by a network); and an out of operation flag (which is set to "False" if the RIS 20 is correctly powered and able to set its state to one commanded or to "True" if the RIS 20 is currently unable to set its state to a commanded one).

Optionally, the RIS 20 may comprise a network usage log (NU-LOG) 240 which stores a total time that each network/BS has used the reconfigurable intelligent surface 270 in the last time period and optionally a complete listing of times and lengths of usage of the RIS 20 for each network, during a defined time period.

As a further option, the RIS 20 may comprise RIS sensor(s) (RIS-S) 250, e.g., a set of sensors which collect the location and orientation of the reconfigurable surface 270.

Optionally, the system may comprise a published RIS installation database (RIS-I-DB) 30 in which details of all RIS installations and a means of requesting registration for them are stored, whose functionalities include:
i. means/functions for entering new RIS installations into the RIS installation database 30; and
ii. means/functions for querying the RIS installation database 30 according to a location and/or according to an RIS type and/or according to RIS properties.

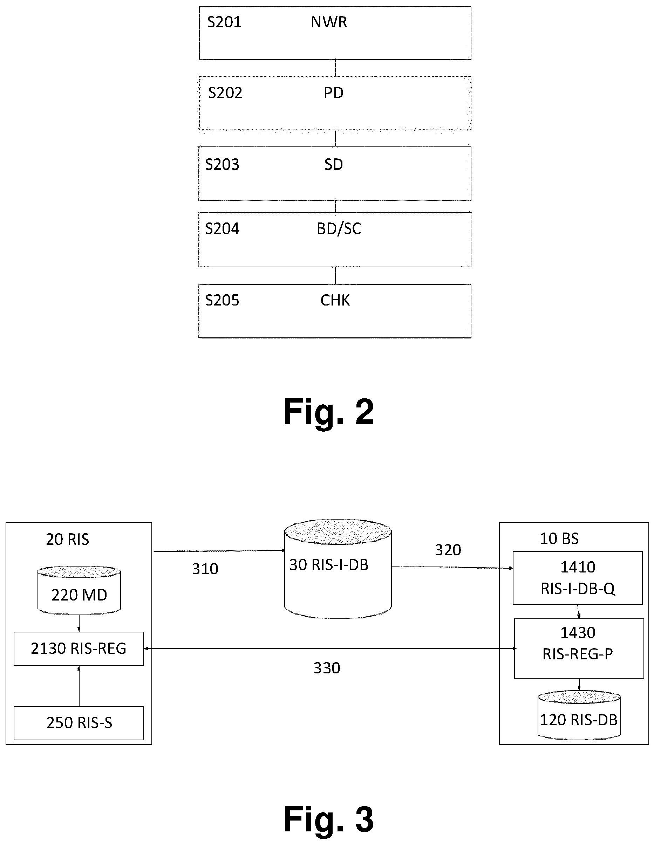

Fig. 2 schematically shows a flow diagram of an RIS registration and control method according to various embodiments.

In a network registration (NWR) step S201, the network (e.g., BS 10) registers the RIS 20 and determines all parameters needed for its control, while the control is performed by validated and accepted commands and queries.

In a subsequent path determination (PD) step S202, the network/BS determines an optimal communication path with a UE (e.g., UE 40), including directing the path of a beam-formed (directed) signal towards the RIS 20 and setting the RIS state so that the beam is correctly redirected towards the UE.

In a following state determination (SD) step S203, the network/BS queries the RIS 20 to determine its current state, including whether it is commanded by another network and optionally, what the current commanded priority level is.

Then, in a beam directing and state commanding (BD/SC) step S204, if the path found in step S202 is a path which achieves good quality communication, and the network/BS is able to command/control the RIS 20, the network/BS directs its beam-formed (directed) signal towards the RIS 20 and commands the RIS 20 to the relevant state. This procedure may be repeated as the UE moves, or as large objects in the environment causing obstruction of RF communication path(s) move.

Finally, in a checking (CHK) step S205, the network/BS routinely checks whether the RISs in its RIS database 120 remain operational.

Hence, newly installed RIS systems can be registered such that the network/BS has an ability to command them to desired states, including discovery methods if a formal registration process for the RIS is not available. This provides an ability to rapidly plan communication paths which include relevant RIS systems, avoiding exhaustive real-world search through BS beam directions and RIS states. Moreover, a registered RIS that is no longer functional can be removed from possible communication path(s) with end users.

Fig. 3 schematically shows an RIS discovery and registration process according to an embodiment with RIS installation database 30 for RIS enabled communication, including required and optional subprocesses.

This process enables registration of a newly setup RIS 20 within a network and a validation of the network with the RIS 20, thereby establishing the properties of the RIS 20 with the network and enabling the network to validly command the state of that RIS 20.

An RIS installer may enter 310 a unique identifier of the RIS 20 along with a method of requesting registration in the RIS installation database 30 or this may be performed automatically by the RIS 20 when switched on for the first time or triggered by a predetermined user-initiated or network-initiated trigger event.

The BS 10, which is given access authorization e.g. by virtue of its operator's credentials, periodically checks 320 the RIS installation database 30 for new entries by using its RIS installation database querying function 1410. Alternatively, the BS 10 may be notified by the database 30 if a relevant new entry is added that matches a previous query by the BS.

The BS 10 then uses the database-entered method of requesting registration and its RIS registration process capability 1430 to obtain the RIS metadata 220 from the RIS 20 by using an RIS metadata negotiation and validation procedure 330 with the RIS registration function 2130. Although this process is shown as a direct procedure, it may also happen indirectly via a broker or service.

The details, including the RIS metadata 220, is entered into the RIS database 120 of the BS 10. If the RIS 20 contains RIS sensors 250, the location and/or orientation of the RIS 20 is collected from these sensors 250 and communicated to the BS 10 as part of the RIS metadata 220.

The BS 10 may negotiate the ability to control the RIS 20 using its RIS registration process capability 1430 to obtain data for validation, a priority for the RIS use and optionally a payment price and schedule for use of the RIS 20. Here, "negotiation" may not strictly include an individual price/access negotiation; it may be a simple request/response protocol, where the network requests access for a particular BS B1 (e.g., BS 10 of Fig. 3) to control a particular RIS R1 (e.g., RIS 20 in Fig. 3) and the RIS installation database 30 grants this access based on an existing bulk contract of the RIS owner with the network operator.

In other cases, a price negotiation process or other types of automated negotiation may be included.

Once successfully concluded, the command/query validation process can be agreed, which may, for example be that the public key (e.g., a Rivest-Shamir-Adleman (RSA) public key) is exchanged enabling the secure exchange of commands or responses. In an example, the security material may be obtained by the BS 10, so that it can later use this to authenticate to the RIS 20.

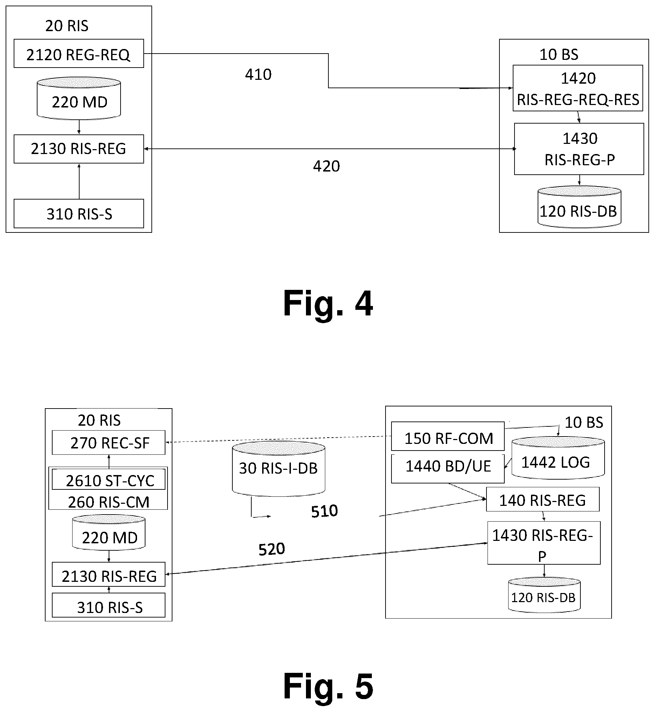

Fig. 4 schematically shows an RIS discovery and registration process according to an embodiment with RIS request for registration.

Following installation and on power-up, the RIS 20 is configured to use its RIS registration request (REG-REQ) capability of the RIS command/query validation and acceptance (RIS-CQ-V) capability 2120 to find local networks and request registration with those networks by securely transmitting 410 its RIS unique identifier and method of requesting registration to the RIS registration request response function (RIS-REG-REQ-RES) 1420 of the BS 10. This may be done directly, or indirectly. In the latter case, e.g. the RIS 20 may connect as a UE to a BS (e.g., gNB) and may then transmits its registration request to a network function or internet service, so that the BS 10 is a network service in this case.

The BS 10 negotiates 420 the ability to control the RIS 20 using its RIS registration process capability (RIS-REG-P) 1430 to obtain validation, a priority for the RIS 20 use and optionally a payment price and schedule for use of the RIS 20.

Once successfully concluded the validation process is agreed, which may, for example, include the exchange of a public/private RSA key for encryption/decryption of the commands/responses, or the exchange of a public key for authentication purposes.

The RIS metadata 220 is supplied to the BS 10, which is entered into its RIS database 120. If the RIS 20 contains RIS sensors (RIS-S) 310, the location and/or orientation of the RIS 20 may be collected from these sensors 310 and communicated as part of the RIS metadata 220.

Fig. 5 schematically shows an RIS discovery and registration process according to an embodiment with autodiscovery of the RIS 20 in a locality method.

When the RIS 20 is installed and powered up but is not yet registered by any network, its initial behavior of the RIS control module (RIS-CM) 260 may be set to the state cycling (ST-CYC) function 2610 where the RIS 20 periodically changes its state to one selected at random between widely separated states.

In addition, owner(s) of the RIS 20 may set the RIS 20 to activate this state cycling function 2610 when not being controlled by a network/BS (rather than to a default RIS state) in order to (for example) prevent any networks from using the RIS 20 as a passive surface without appropriate payments or permissions, which might otherwise be possible if the state were predictable.

When the RIS 20 is registered and controlled by at least one network, the RIS 20 can adopt a state commanded by a registered network. The RIS 20 may also be operating the state cycling function 2610 whereby it is randomly changing its state when not being actively commanded to a state. In both cases a beam pointed at the RIS 20 from an unregistered BS will be redirected in different directions at different times.

A network (i.e., BS 10) with which the RIS 20 is not currently registered can, using its beam direction/UE location log (LOG) 1442 analyzed by its beam direction/UE location log analysis (BD/UE) 1440, may then note that beam paths to certain end UE locations can vary significantly when the BS beam is pointed in a specific direction. That is, a certain beam direction is associated with a log of end user locations which vary significantly at different times. Or, alternatively it may note that a BS beam pointed in a specific direction gives a particular variable (e.g. intermittent and periodic) connectivity to a particular stationary UE. This analysis may indicate that the RIS 20 is present in that beam direction. The corresponding information stored in the beam direction/UE location log 1442 may have been obtained from the RF communication capabilities (RF-COM) 150 based on a beam directed to the reconfigurable surface (REC-SF) 270 of the RIS 20.

Noting the location and/or beam direction of the newly identified RIS 20, the network can seek a means to establish registration with the RIS 20 by a wide variety of methods, including search in databases, sending a direct request using a wireless communication protocol (e.g. a discovery protocol), sending communications to the companies or individuals located in that building, and so on. In the example of Fig. 5, the RIS registration capability (RIS-REG) 140 of the BS 10 obtains 510 the unique identifier of the RIS 20 and the method of requesting registration from the RIS installation database (RIS-I-DB) 30 based on e.g. a result of the beam direction/UE location log analysis 1440.

Once the RIS registration method has been obtained, the RIS metadata 220 of the RIS 20 is supplied to the BS 10 by using a negotiation and validation procedure 520 between the RIS registration process capability (RIS-REG-P) 1430 of the BS 10 and the RIS registration capability (RIS-REG) 2130 of the RIS 20. The RIS metadata 220 is then entered into the RIS database 120 of the BS 10. If the RIS 20 comprises RIS sensors (RIS-S) 310, the location and/or orientation of the RIS 20 can be collected from these sensors 310 and communicated as part of the RIS metadata 220.

The BS 10 negotiates the ability to control the RIS 20 using its RIS registration process capability 1430 to obtain validation, a priority for the RIS use and optionally a payment price and schedule for use of the RIS 20.

Once this negotiation is successfully concluded, the command/query validation process is agreed as before. This is a validation process for subsequent commands or queries.

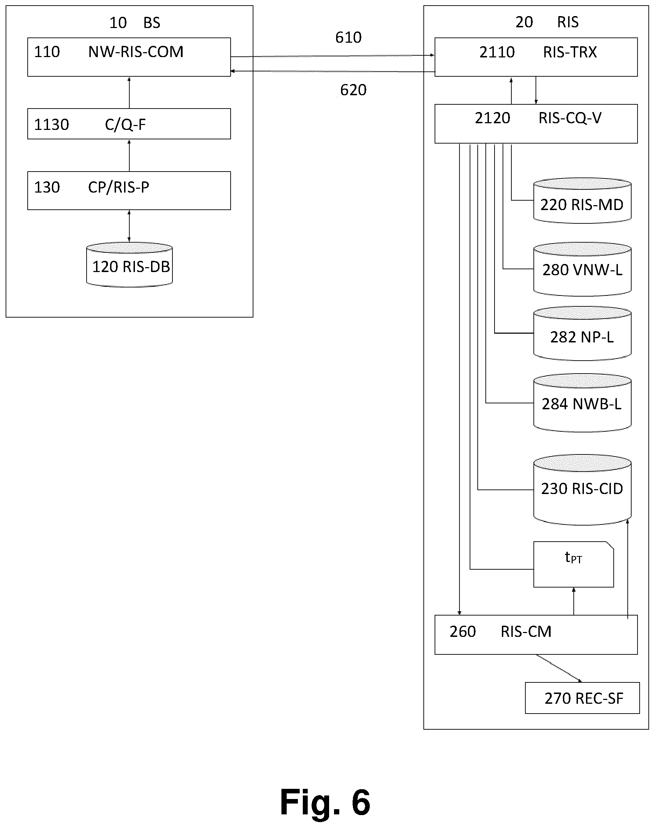

Fig. 6 schematically shows an RIS query and command process according to an embodiment, where a network (i.e., BS 10) seeks to command a specific RIS 20 to adopt a selected state. The process may involve the following subprocesses:
A communication route between the network to RIS communication system (NW-RIS-COM) of the BS 10 and the RIS transmission and reception system (RIS-TRX) 2110 of the RIS 20 is established by the communication path and RIS planning module (CP/RIS-P) 130 of the BS 10 during registration, for example, a 5G communication for commands and queries 610 sent and responses 620 received between the BS 10 and the RIS 20.

Then, a desired selected state of the RIS 20 is checked by the network (i.e., the communication path and RIS planning module 130 of the BS 10) to determine that it is a permitted state in the metadata (RIS-MD) 220 of the RIS 20, by examining the RIS database (RIS-DB) 120. A command is then generated which may include an identity of the originating network, an identity of the target RIS 20 or a temporary address currently associated with that RIS 20, validation data (so that the RIS 20 can check that the message is targeted to itself and that the sender is an authentic/authorized identity), and the query or command (which includes the state being commanded to and a time period required to be in that state, encoded in some suitable representation (e.g., one of a set of quantized time periods from a code book, such as bits indicating classes like '10 frames', '20 frames', '100 frames' etc.).

The BS 10 may then format the query/command using its command/query formatting for validation (C/Q-F) function 1130 into a form that will be successfully validated, for example it may encrypt it using an agreed key for that RIS. The command/query is then communicated to the RIS 20.

The RIS 20 then conducts the following processes:
The RIS 20 receives the communicated query or command 610 using a communication module of the RIS transmission and reception system 2110.

The RIS 20 checks the command/query for validity by its RIS command/query validation and acceptance (RIS-CQ-V) function 2120, for example by verifying a Message Integrity Code (MIC) using the agreed key related to that network and for acceptance. If accepted, the RIS 20 is set by the RIS command/query validation and acceptance function 2120 into the commanded state for at least the commanded length of time. Acceptance may be denied if:
a. The command has an incorrect format or commands to an invalid state or the RIS identity provided does not match the identity of that RIS 20.
b. The command does not come from a valid source which may be stored in a validated network list (VNW-L) 280 of the RIS 20. Examples of invalid sources are a registered network operator or one of its base stations which cannot be correctly authenticated, or a source that can be authenticated but is not authorized to control the RIS 20. A valid source must have successfully completed the registration process.
c. The priority of the request is not higher than the priority of the current controller of the RIS 20 (if there is one).
d. Optionally, if the network is on a network blacklist (NWB-L) 284 stored in the RIS 20. A network may be blacklisted if for example there have been issues with the network, for example failure to pay its bills to the RIS owner and the RIS 20 has been set to deny commands from that network.
e. Some components of the RIS 20 are currently out of order.

If the RIS 20 has received a command and it is validated and accepted, then the RIS command/query validation and acceptance function 2120 controls the RIS control module (RIS-CM) 260 to set the reconfigurable surface (REC-SF) 270 of the RIS 20 to that state, updates the RIS current information data (RIS-CID) 230, and returns a confirmation to the BS 10.

If the RIS 20 receives a query (rather than a command), it returns at least one of the following information:
a. The current configuration state of the RIS 20 or a representation thereof. This may be a summary of the present state (e.g. a high-level state) without details about all actuators.
b. The currently commanded flag which may be set to "True" if the RIS 20 is currently being commanded to its current state and "False" if not.
c. Optionally, a priority order parameter (e.g., current user priority number or indicator) which may be the position, on a stored command priority list (NP-L) 282, of the network that is currently commanding the RIS (only defined in case the currently commanded flag is "True", else it may be NULL).
d. Optionally, a timer value t_{PT} to indicate to the network (i.e., BS 10) how long it has to wait before the network current commanded period ends.
e. If the reconfigurable surface 270 is out of operation for some reason, and the RIS 20 is aware of this, then it should return an out of operation flag set to "True" (otherwise "False"). It may optionally also return error bits or codes describing the problem in more details. Or, an indication of time when it expects to be back online, e.g., using t_{PT}.

If the RIS 20 does not receive any command, it may set the configuration state of its reconfigurable surface 270 to either a baseline state, or if the owner wishes to avoid the RIS 20 being used as a passive surface by unregistered, or non-paying networks, to perform state cycling.

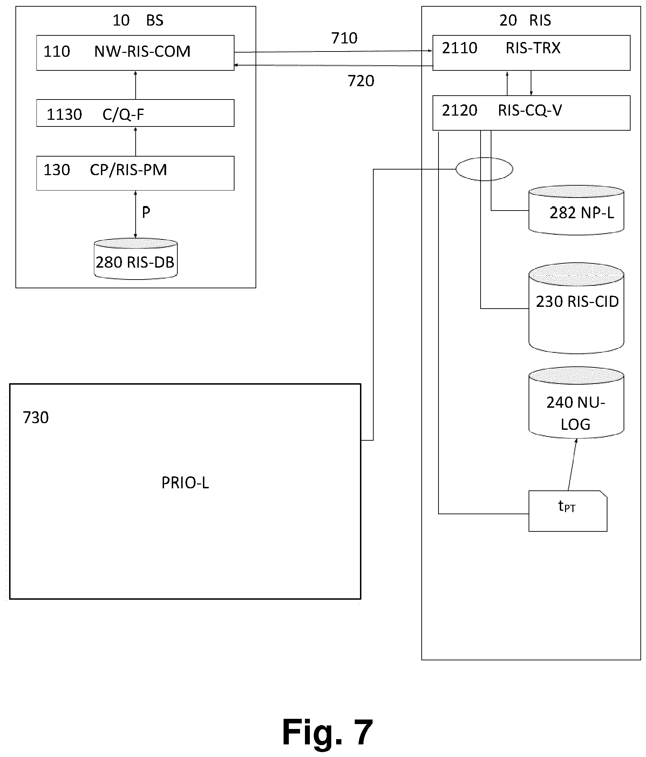

Fig. 7 schematically shows a network control prioritization process according to an embodiment.

An RIS 20 might have several networks as registered controllers. Therefore, a prioritization process may be used to ensure that there is not a deadlock or cycling of states when multiple networks wish to use the same RIS 20 in their communication paths.

During registration, a network (e.g., BS 10) can negotiate a priority for control of that RIS 20, with respect to other networks that also have negotiated for control. This may be a fixed number or may vary according to time of day and so forth or may be renegotiated at regular intervals or for specific events. For example, network A may be given a priority 1, network C a priority of 2 and network B a priority of 3. This means that networks B and C cannot command the RIS 20 when it is currently being commanded by network A. This priority number (P) can be stored by the BS 10 (e.g., by the communication path and RIS planning module (CP/RIS-PM) 130) in the RIS database (RIS-DB) 280 and by the RIS 20 in the RIS network priority list (NP-L) 282.

An example of a priority logic (PRIO-L) 730 for checking acceptance of a command or query 710 by the RIS command/query validation and acceptance (RIS-CQ-V) function 2120 of the RIS 20 may be as follows:
From network identity in command or query 710:
   Find a priority of the network in the RIS priority list 282: P1
From the RIS current information data (RIS-CID) 230:
   Find a current user priority number: P2
If P2>P1:
   Acceptance = False
Else:
   If P2<P1 and time during period < minimum time
      Acceptance = False
   Else:
      Acceptance = True

Prior to commanding the RIS 20, the BS 10 can query 710 the current state of the reconfigurable surface of the RIS 20 by the network to RIS communication system (NW-RIS-COM) 110 and the command/query formatting for validation (C/Q-F) function 1130, which is returned 720 to the BS 10 by the RIS transmission and reception system (RIS-TRX) 2110, e.g., along with the state of the currently commanded flag and the priority number of the current user.

If the BS 10 knows it has a higher priority number than the current user of the reconfigurable surface of the RIS 20, and it requires a different state to that being used, and it cannot achieve good communication via a simple alternative route, then the BS 10 can command the RIS 20 to a different state. Optionally, this command may include an indicator for a desired period of time that the RIS should keep the state.

If the RIS 20 is not currently being commanded, then it accepts the next valid network command and enters that network's priority number (e.g., looked up from the RIS network priority list 282) into the current user priority number and the currently commanded flag is set from "False" to "True". Optionally, the time during period timer t_{PT} is set running (started).

At the end of the command time period, unless another command is received, the RIS 20 sets the current user priority number to NULL and the currently commanded flag to "False". Optionally, the value of the time during period timer t_{PT} may be added to the network usage log (NU-LOG) 240 along with the commanding network identity.

If the RIS 20 receives a command from another network while the currently commanded flag is set to "True", the RIS command/query validation and acceptance function 2120 of the RIS 20 compares the priority number of the new command network with the value of the current user priority number. If higher, then the RIS 20 ceases the previous command and sets it state to the new commanded state, the commanded flag remains set to "True", and the current user priority number is set to the new network's priority number. Optionally, the value of the time during period timer t_{PT} (plus the previous networks identity) is added to the network usage log 240 and the time during period timer is restarted.

In an alternative option, minimum time slots may be enabled, so that networks are not 'thrown out' in favor of a higher priority network until at least a minimum time has elapsed since the command was initiated.

As a further alternative option, if the RIS 20 is using a 'pay per use' scheme, a priority may be secured for the commanding network for a time period, e.g., by payment with a price related to that priority. That is, for a top priority slot, the network would need to pay a top priority price. The network could then determine how important the use of the RIS 20 is to a communication and select a priority level as appropriate.

Given the large search space introduced into the beam search by one or more RIS with possible option of communicating with a UE, traditional beam search techniques, expanded by commanding cycling though the states of the RIS, may introduce significant delays. Therefore, an improved beam path determination (e.g., BS beam direction and RIS state) for communication with a UE at a certain location is proposed.

The base station may perform a real-world active search for the best communication path to the UE, perhaps cycling through the states of the RIS (or the use of its elements one at a time) and beam directions, until it determines an RIS state which achieves communication which is good enough for its operative requirements. If the RIS has many possible states (or elements), this kind of search may not be fast enough for routinely establishing communication. Therefore, using this real-world search may be restricted to the first few times that the network uses an RIS, subsequently one of the other suggested processes would be used.

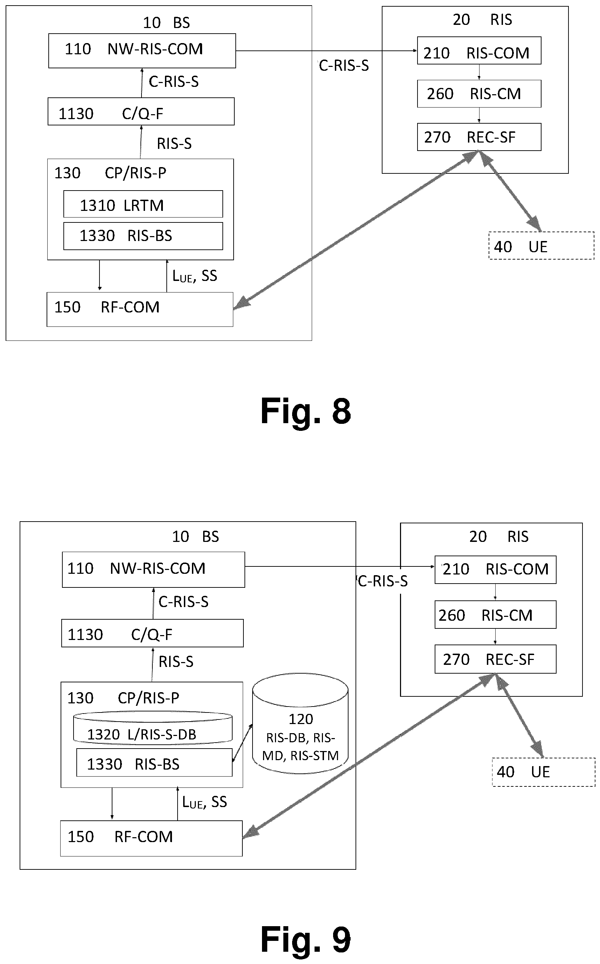

Fig. 8 schematically shows a communication path establishment process according to an embodiment with exhaustive search.

The proposed beam path establishment process enables the network to determine the location of a UE 40, to determine if an RIS inclusion is appropriate for communication with that UE 40, to determine which is the optimal state for the RIS to be set to in order to assist in that communication, and to determine the correct beamforming direction either directly to the UE 40, or to a passive surface that redirects to the UE 40 or to the RIS now set to the correct state to transmit/reflect the beam to the UE 40.

In the embodiment of Fig. 8, a transmission ray-traced modelling supported beam search is proposed.

The network (e.g., BS 10) maintains a 3D local radio transmission model (LRTM) 1310 of the environment, including the known RISs and the effects of their states, and performs a rapid simulated optimization process (e.g., by the communication path and RIS planning module (CP/RIS-P) 130) using this model to determine a correct beam direction and RIS state selection to achieve the best communication with a UE located at a specific location.

Once a suitable communication path has been found by the model, a small real-world local search can then be performed e.g. by the RIS beam search capability (RIS-BS) 1330 to optimize the link.

The communication path and RIS planning module 130 supplies a next RIS state (RIS-S) to the command/query formatting for validation (C/Q-F) function 1130 which generates a command (C-RIS-S) for the next RIS state and supplies it to the network to RIS communication system (NW-RIS-COM) 110. This command is then transmitted to the RIS 20 and received by the RIS communication module (RIS-COM) 210 which validates and forwards it to the RIS control module (RIS-CM) 260. The RIS control module 260 controls the state of the reconfigurable surface (REC-SF) 270 of the RIS 20 according to the received command, so that the reflection or refraction or redirection of the transmission beam from the BS 10 is modified accordingly.

The quality of the resulting communication paths as determined by a signal strength (SS) or another quality parameter obtained e.g. by the RF communication capability (RF-COM) 150 together with the location (L_{UE}) of the UE 40 may then be used to update the model.

Fig. 9 schematically shows a communication path establishment process according to an embodiment with beam path memory and limited local beam search.

The communication path and RIS planning module (CP/RIS-P) 130 of the BS 10 can remember the path found for the UE 40 in the specific location (L_{UE}) and store it in a location/RIS state database (L/RIS-S-DB) 1320. This works similarly for the embodiment of Fig. 8 with the 3D local radio transmission model 1310.

If, in the past, this model has calculated a path and using this path by the BS 10 gave good results, it can be stored in the database 1320. Then, when a future UE is found near this location, the previous beam direction and state of the reconfigurable surface (REC-SF) 270 are retrieved and used, with some further optimization (e.g., using local search in the RIS states) and updating of the parameters used to communicate to that location.

A limited search for optimal paths in the real-world is performed, having stored the results from past uses of the RIS 20, that is, the RIS states for communication with specific locations. From this start it can initiate a limited local search process through RIS states. Using the RIS state topological map (RIS-STM), the local search can be performed from the initial selected state.

Pilot uplink signals from the UE 40 may be used to determine its location (L_{UE}) within the space.

If beamforming in that direction directly (not via the RIS 20) is determined to be not good enough and a similar (but not necessarily identical) location has been served by the (nearby) RIS 11 in the past, the RIS state that was used for communicating with that location in the past is retrieved and the RIS state is set to that value, whilst beam forming at the RIS 11.

Using the RIS state topological map for that RIS, stored in its RIS metadata (RIS-MD) in the RIS database (RIS-DB) 120, a local search through the adjacent states is performed as described in the embodiment of Fig. 8 and the signals quality is determined (e.g., based on the signal strength (SS) or another quality parameter).

When an adequate signal quality has been achieved (e.g., a predetermined threshold has been reached), the corresponding RIS state is used to communicate with the UE 40 and the RIS state and UE location (L_{UE}) is stored in the location/RIS state database 1320 for that RIS 11.

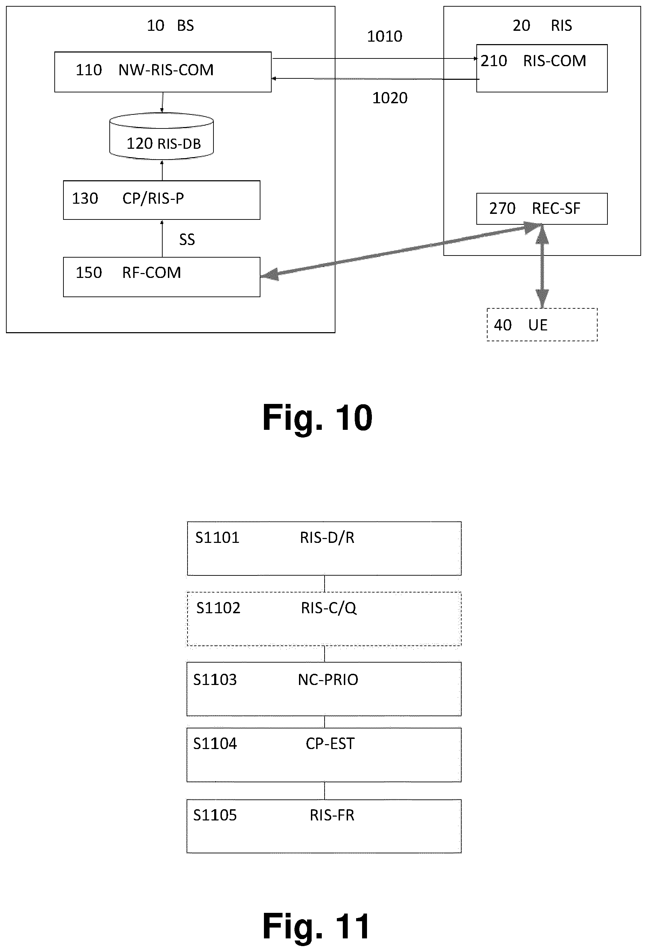

Fig. 10 schematically shows a failure recognition process according to an embodiment.

There will be situations where the RIS 20 has failed or is unpowered, has become obscured etc. and one or more network(s) and/or BS(s) need to recognize this situation and cease to use the RIS 20 in their communication paths. This could be a problem that impacts one network or one BS only. For example, a security key used by a particular BS may have expired. Or, the RIS 20 may have become obstructed due to recent building activities, but only for a couple of BSs, while other BSs can still use the RIS.

If the RIS 20 retains communication and control capabilities, but its reconfigurable surface (REC-SF) 270 is inoperative, then a query 1010 to the RIS 20 by the network to RIS communication system (NW-RIS-COM) 110 of the BS 10 can return a response 1020 with an out of operation flag set to "True", and the BS 10 can mark its RIS database (RIS-DB) 120 for that entry as inoperative so that it is not included in beam search procedures by the communication path and RIS planning module (CP/RIS-P) 130.

If no response to the query 1010 to the RIS 20 is received from the RIS communication module (RIS-COM) 210, then the BS 10 may also mark its RIS database 120 for that entry as inoperative and therefore exclude it from the beam search procedures.

It is noted that the network may have a central RIS database (not shown), while at the same time each BS 10 may have a 'subset' RIS database 120 containing only the RISs that it can use.

If the RIS 20 correctly responds to queries and apparently to commands, but the RF communication capabilities (RF-COM) 150 of BS 10 measure a communication signal strength (SS) received from the UE 40, which remains unchanged when the RIS 20 is set to different states, then that RIS 20 is marked as inoperative in the RIS database 120.

In an additional embodiment, the RIS may fully integrate communication capabilities, e.g., a UE that is able to communicate with the network and/or BS and, optionally, is able to measure the signal strength between itself and the end user UE using for example device-to-device (D2D) wireless communication. D2D communication is a communication between two mobile users without traversing the BS or core network. It may be non-transparent to the wireless network and can occur on the cellular frequencies (i.e., inband) or an unlicensed spectrum (i.e., outband).

As regards the registration process, the RIS with integrated UE can join a 5GS network in an automated manner, for example as an integrated access and backhaul (IAB) relay or as regular 5G NR UE, or as a narrowband Internet of Things (NB-IoT) UE. The RIS-UE may act as an IAB mobile terminal (IAB-MT). The IAB-MT may join a gNB as a usual UE and when the gNB and/or network determines that it is an IAB node, then the corresponding communication link can be established. In this case, RISs can join a gNB similar to a UE. In case of a joining as an IAB relay, the RIS UE may first connect with a gNB as the IAB-MT does. When the gNB detects the capabilities of the RIS UE, the gNB may acquire/register the RIS that will act as a distributed unit of the gNB. In the case of a RIS, all communication/control capabilities may be provided at the gNB. For instance, beam steering in an RIS is done by sending a fixed beam towards the RIS and controlling the RIS states.

If the RIS has an integrated UE, then it is possible to find the position of the RIS, e.g., by using 5G localization/ranging services. It is also feasible to determine if there is line-of-sight (LoS) between gNB distributed units (DUs) and the RIS's UE, e.g., by analyzing the signal strength and delays of direct link and reflected links. If an LoS is found, it is also possible to estimate which area a given gNB DU might cover with the support of the RIS. This information can be stored in the RIS database and/or used to update the local radio transmission model.

Once registration on the network has been completed, and the RIS is able to provide its full RIS metadata to the network, the RIS is entered into the RIS database and depending on implementation details either becomes a new RIS-DU under direct control of the gNB central unit (CU) in case the RIS implements an IAB node, or becomes a new RIS-UE which can be controlled by multiple networks. In the latter case, data access to this RIS may be provided by a single gNB (e.g., nearest, or highest-signal-quality gNB).

As regards the command/query process, the CU in the gNB can both query the RIS and command the RIS configuration via the UE in the RIS.

As regards the search for communication paths, if the RIS has a UE, then that UE can measure the signal strength of the beams of the gNB-DUs. This information can be used to determine which beams of which gNB DUs reach the RIS when set to a specific state, thereby delegating to the RIS the search for optimal final signal paths (that is, RIS states) from the RIS to the UE.

In a further embodiment, the RIS may be used for multi-BS signal interference avoidance. If two BSs are each communicating with a different UE on the same frequency, and the BS signal paths to the two UEs overlap, there is a potential for interference. This may be avoided if one (or both) BS use a path via one or more RISs instead.

Therefore, in this embodiment, a node (e.g., a high level node which controls several local BSs) representing a group of linked BSs seeking to communicate with several UEs can be used to provide a cooperative communication path planning algorithm which additionally checks for potential path interference in the operation of different BSs and selects a path via an RIS if doing so reduces the interference between the respective BSs communication with respective UEs.

Fig. 11 schematically shows a flow diagram of a process for an RIS enabled communication according to various embodiments.

The process is designed to enable the set up and command of RISs within a radio communication system such as 5G/5G-NR.

An initial RIS discovery and registration process (RIS-D/R) S1101 enables the registration of a newly setup RIS with a network and the validation of the network with the RIS, thereby establishing the properties of the RIS with the network and enabling the network to validly command the state of that RIS.

This may be achieved by an RIS installation database registration method where a new RIS looked up in a global RIS installation database and a registration method is retrieved (as explained in the embodiment of Fig. 3), or by an RIS request for registration method where the RIS sends communication to local networks when first switched on and sends the registration method (as explained in the embodiment of Fig. 4), or by a registration by autodiscovery of the RIS in a locality method where the BS notes local transmission paths with variable properties associated with an RIS and seeks registration through a variety of means (as explained in the embodiment of Fig. 5).

Then, in an RIS query and command process (RIS-Q/C) S1102, the network and/or BS specifies the command or query to be sent to the RIS using e.g. the RIS query and command capability, formats the command/query using e.g. the command/query formatting for validation function, transmits the command/query to the RIS using e.g. the network/BS to RIS transmission and reception system, and receives any response from the RIS using the network/BS to RIS transmission and reception system. Additionally, the RIS receives the communicated query or command using the RIS communication module, checks the command/query for validity and if the command/query is to be accepted using the RIS command/query validation and acceptance function, and if a command is accepted, the RIS command module sets the reconfigurable surface of the RIS to the commanded state, or if a query is accepted, the RIS returns the RIS current Information data including the RIS state.

In a network control prioritization process (NC-PRIO) S1103 during registration, with a subsequent change or dynamically with a command, the RIS stores the priority of a network that commands the RIS in the RIS network priority list.

If the RIS is not currently commanded and receives as command from a network, it determines that commanding network's priority and stores it as the current user priority number in the RIS current information data, and then carries out the command.

If the RIS is currently commanded, it compares the priority number of a new commanding network with the priority number of the currently commanding network (stored as the current user priority number) and if the new priority number is higher, the RIS ceases the command from the previous network and allows the new network to command.

Alternatively, even low-priority networks may be given a minimum time period for their command, and the change in command is only enabled after this minimum command time has been reached.

In a communication path establishment process (CP-EST) S1104, the network and/or BS seeks to establish a communication path with a UE, where this path could include one or more RIS (where the RIS database indicates that that RIS is operative and that the network has command rights).

This may be achieved by an exhaustive search through beam forming directions and RIS states to find the best communication path to a UE, and when found, the BS directs its beam at the RIS and commands the RIS to the correct state.

Alternatively, as indicated in the embodiment of Fig. 8, a transmission ray-traced modelling supported beam search may be applied, where a transmission modelling within a local radio transmission model of the local environment is used to search for suitable beam paths (e.g., BS beam direction and RIS states), followed by a fine tune using local search in neighboring RIS states retrieved from an RIS state topological map. When found, the BS directs its beam at the RIS and commands the RIS to the correct state.

As a further alternative, as indicated in the embodiment of Fig. 9, results of previous beam direction plus RIS states and UE location are stored in a location/RIS state database. For a new UE location, the nearest entry for this location is searched in this database and if sufficiently close, the stored settings for BS beam direction and RIS state are used and fine-tuned with a local RIS state search. When found, the BS directs it beam at the RIS and commands the RIS to the correct state.

In an RIS failure recognition (RIS-FR) process S1105, as indicated in the embodiment of Fig. 10, the network and/or BS enters into its RIS database that an RIS is inoperative if the RIS returns an out of operation flag set to "True" or if the RIS returns no response to a query sent to the RIS or if communication signal strengths and/or other signal quality indicator(s) indicate no actual change in the RIS state.

In the following, further embodiments are described, which address at least one of the problems of scheduling/planning a request by a network and/or BS for a control over an RIS, intermittent power supply when RISs are deployed ubiquitously, adequately building a required RF propagation model, use of AI models to improve performance and keep it at a high level even while environmental/building conditions change, security/data protection of the query function against leakage of sensitive data about network operations, need for fast switching of RIS states, and need for concurrent operation of RIS for multiple operators.

In an embodiment, the RIS control module 260 of Fig. 1 may be extended with a scheduler to enable the use of scheduled RIS states. This implies that a network/BS that sends a command to the RIS can indicate a time period in the future for which it needs to set an RIS actuator for setting the state of the reconfigurable surface 270 to a particular state. The RIS control module 260 determines based on its schedule whether the requested command can be accepted, or not. One request by a network/BS may include multiple such scheduling requests.

In particular, when an RIS receives multiple requests for a same time period to set the RIS actuator to a particular single state, then all these requests can be accepted by the RIS without necessarily having to limit the control of the RIS to the highest-priority commanding network/BS.

Optionally, the RIS query response can be extended with one or more of the following information items:
- a "time remaining in state" field that indicates for how long, or until what end time, the RIS remains occupied in the current commanded state. This enables the querying network/BS to schedule a time in the future when it can do another request to the RIS to command a particular RIS state. Or, it can immediately send a schedule message to schedule the RIS to change to that particular state in the future, at a time at or after the "time remaining in state" has passed.
- a schedule information which may indicate which future time slots are already "booked" by other networks or BSs and are not available anymore for scheduling requests.
- as a variation of above, the schedule may include a commanded priority information to indicate the priority of each scheduled time slot. If the commanding network/BS has higher-priority credentials, it may send a schedule request that supersedes the existing scheduled slots. Then, the original scheduling entities will be notified that their reservation has been superseded.

The RIS command can be extended with scheduling requests, e.g., a timeslot indication (in the future) when a particular RIS state is desired, and/or multiple scheduling requests can be conveyed in one message, optionally with multiple priority levels. (Pricing of RIS usage may depend on the requested priority level of a command or scheduling request.)

Furthermore, the scheduler can be extended to allow multiple networks/BSs to use the RIS simultaneously. This assumes that a RIS can act, e.g., as a mirror, and incident signals do not interfere with each other. Under this assumption, each network/BS may inform the RIS about a desired configuration state of the RIS for a number of time units (e.g., a frame, a subframe, a timeslot, an Orthogonal Frequency Division Multiplexing (OFDM) symbol etc.) and the RIS scheduler can then schedule the RIS state for the corresponding timeslots.

In an example with two BSs BS1 and BS2, the following scheduling may be applied:
- BS1 might desire the following sequence of states: S1, S1, S1, S3, S3, S4, S4, S7.
- BS2 might desire the following sequence of states: S1, S1, S2, S2, S3, S5, S5, S7.
- Then, the RIS scheduler may schedule the following states: **S1**, **S1**, S1, S2, S2, **S3**, S3, S4, S4, S5, S5, **S7** (the scheduled RIS states that are in bold characters are the ones that are shared by both networks.)

Sharing the RIS states between networks/BSs increases the income when renting an RIS. Furthermore, it reduces the overall latency. For instance, in the above example both networks/BSs (i.e., BS1, BS2) were able to use the RIS during 8 time units, while the overall communication took only 12 time units.

When the RIS scheduler has determined the schedule of the RIS states, the RIS controller (e.g., RIS control module (RIS-CM) 260) may inform the networks/BS when its desired RIS states are scheduled. For instance, in the context of above example, the RIS controller may sends the following messages:
- RIS to BS1: **[1, 2,** 3, **6,** 7, 8, 9, **12];** and
- RIS to BS2: **[1, 2, 4**, **5**, **6**, 10, 11, **12]**,
where the numbers in the message represent the time unit index associated to each of the requested timeslots. Here, the bold characters indicate those time slots that are used by both networks/BSs.

Note that upon reception of one of these messages, the network/BS might infer information about the state of the RIS in other times. For instance, since BS1 asked for 3x S1 and 2x S3 and those are allocated in time unit indexes [1,2,3] and [6,7], then the BS1 might guess that time unit indexes [4,5] are allocated to either S1 or S2. To avoid this, the RIS scheduler can apply a random permutation to the allocated states. For instance, the sequence of allocated states (resources) might be as follows:
**S3**, S4, S1, **S7**, S2, S2, **S1**, S3, S5, **S1,** S4, S5.

Then, the messages sent to the networks/BSs would be as follows:
- RIS to BS1: [3, 7, 10, 1, 8, 2, 11, 4]
- RIS to BS2: [3, 7, 5, 6, 1, 9, 12, 4]

In a further embodiment with intermittently powered RIS, some RISs may be embedded into the built environment or natural environment without having access to a reliable, wired, steady power source for operation of the RIS. Examples of such intermittently powered RISs may include RISs powered by solar power, RISs powered by harvested energy due to mechanical motion, vibration, wind, etc., or RISs powered by energy of impending RF waves (RF energy harvesting).

The advantage of such types of RISs is that barriers to widespread adoption are removed, i.e., there may be much more RISs integrated into the environment, even at places where normally no access to power/energy can be easily provided or where the cost of installation would otherwise be prohibitive.

To enable intermittently powered RISs, the following information can be added to RIS databases:
- Intermittent availability information
   ∘ Example: a solar-powered RIS may be configured to register in a database its times of availability based on estimated daytime period in its present location and in present season.
- Power-on conditions information
   ∘ Example: an RF-energy-powered RIS may be configured to register during its initial registration that a controlling BS needs to send an RF beam to it in order to activate it. The controlling BS can look this up and perform the RF beam focusing to the RIS to power it prior to a query/command.
   ∘ Example: a wind-powered RIS may be configured to register itself as wind-powered, so that a controlling BS can use local/current weather predictions to make an initial estimate if that RIS would be available at a given time.
- Reliability information
   ∘ Example: an RIS may be configured to advertise itself as "medium reliability" or "50% reliability" to indicate that it may not always be active. A Network/BS can use this information to make a selection out of multiple RISs. For non-time-critical information such as an IoT node UE reporting daily its status, which is however only reachable via a RIS, the BS can even retry the same RIS at a later time of the day if it finds that the current or target RIS is not powered or available at present.

In another embodiment, a tryout phase may be introduced after installation of a new RIS. There may be a limited time period of hours or days to enable nearby networks/BSs to try out the new RIS and record data about its properties, reachability and/or effect on network communication. This tryout period may be offered for free to network operators to stimulate adoption of the new RIS in the local communications infrastructure.

During the tryout phase, options as described in connection with the communication path establishment process S1104 of Fig. 11 may be executed, as well as the training of the artificial intelligence (AI) model mentioned in the following embodiment.

In another embodiment, AI models may be used for the communication path establishment process S1104 of Fig. 11, where the two options of transmission (3D) ray-traced modelling supported beam search and location beam path memory with limited local beam search are described.

The present embodiment adds a third option which is the use of an AI model for learning the relation or association between BS (gNB) beam settings and parameters, RIS states of nearby RISs and/or UE location(s) as input parameters and link quality and/or performance to UE(s) as output parameters.

This provides the advantage that an explicit (geometric) 3D model is not required and the impact of the built environment can be implicitly learned from interactions with RISs and measurements of resulting performance. The AI model could be operated in a network, or in a BS, and could be operated in conjunction with any model used in the other embodiments. In the latter model-based embodiments, a 3D model and/or beam path memory model may be initially used to make decisions, while the AI model learns the input/output relations. Once the AI model predictions are of sufficient quality, it can take over the decision-making automatically.

In another embodiment, the RIS state may be concealed to avoid information leakage. In any of the above embodiments, an authorized network/BS that is able to control a RIS is also able to query its current state. Providing such detailed state information may be undesired, as it could disclose information about how competing network operators use their RIS(s) for their purposes. This may happen unless the RIS is operating in the state cycling mode and the state is determined by the RIS at random.

According to the present embodiment, an RIS can provide specific "non-disclosed" state information values as a response to a query for the RIS state. Such state information values can be returned if the RIS is currently commanded by another operator/BS but the RIS does not want to disclose what the exact commanded state is.

One exemplary behavior of the RIS may be to respond to a network/BS querying a desired state, with a "matching" value or flag if the desired state equals the present state of the RIS. In other cases, the RIS may respond with a "non-matching" value or flag. As another option, the RIS may respond with a degree of matching, e.g., a value or flag that indicates "similar" or "same"/"different", or a percentage of match (0-100%).

Providing such approximate values avoids disclosing the details of the RIS state information (which may consist e.g. of details of multiple actuators/array).

In another embodiment, the BS may command the RIS with multiple priority levels.

A single network/BS may be authorized to use multiple priority levels. It may use different levels of priority depending on a specific command/scheduling request. The reason to use lower priority may be e.g. to save RIS costs, while in some cases the higher priority is really needed and the additional cost is accepted.

In another embodiment, the RIS-UE described above may be used but also act as a UE-to-Network Relay UE.

More specifically, in a 5G environment where the BS is called gNB, downlink (DL) signals from a gNB to an end-user UE may be propagated directly to the end-user UE via the RIS (reflection/refraction). Uplink (UL) signals from the end-user UE to the gNB may be propagated directly to the gNB via the RIS (reflection/refraction) if the RIS and/or the gNB determines that the signal quality/power is sufficiently high. Otherwise, if it is determined that the signal quality/power is not sufficient, the RIS may take a more active role and operate as Relay UE to actively relay the data from the end-user UE to the gNB.

In another embodiment, the RIS-UE may be commanded to direct a beam towards a particular end-user UE.

To achieve this, the RIS may serve one or more end-user UEs in a role similar to a Relay UE. The end-user UEs may not be aware that there is an RIS involved and may assume a direct communication with a gNB. The gNB does not command the RIS to go to a particular state but commands the RIS to target a particular end-user UE of a list of known end-user UEs that is available to the RIS. During a procedure, possibly executed by the gNB, the RIS may have been supplied with the list of end-user UEs to serve and optionally their estimated locations.

After receiving a command from gNB, the RIS may change its state so as to steer or focus the beam received from the gNB towards a particular end-user UE. This assumes that the RIS has collected the right information to be able to focus or steer the "reflected" beam on the particular end-user UE, as requested. This may be supported by D2D measurements and LoS detection that the RIS may be doing with a particular end-user UE, e.g., using proximity services (ProSe) and/or vehicle to everything (V2X) sidelink (SL) communication.

V2X communication is communication between a vehicle and any entity that may affect, or may be affected by, the vehicle. It may use cellular networks and is then called cellular V2X (or C-V2X) to differentiate it from the WLAN-based V2X or other types. In 3GPP Release 15, the V2X functionalities are expanded to support 5G. C-V2X includes support of both direct communication between vehicles and traditional cellular-network based communication. The direct device-to-device (D2D) communication between vehicle and other devices (V2V, V2I) uses a so-called PC5 interface. PC5 refers to a reference point where the UE directly communicates with another UE over a direct channel. In system architectural level, ProSe is a feature that specifies the architecture of the direct communication between UEs that are in mutual proximity.

Optionally, an RIS that has reliably determined the presence of an end-user UE in this way may report this to the database/gNB such that the gNB can make use of the RIS's ability to now focus the gNB's beam on this UE.

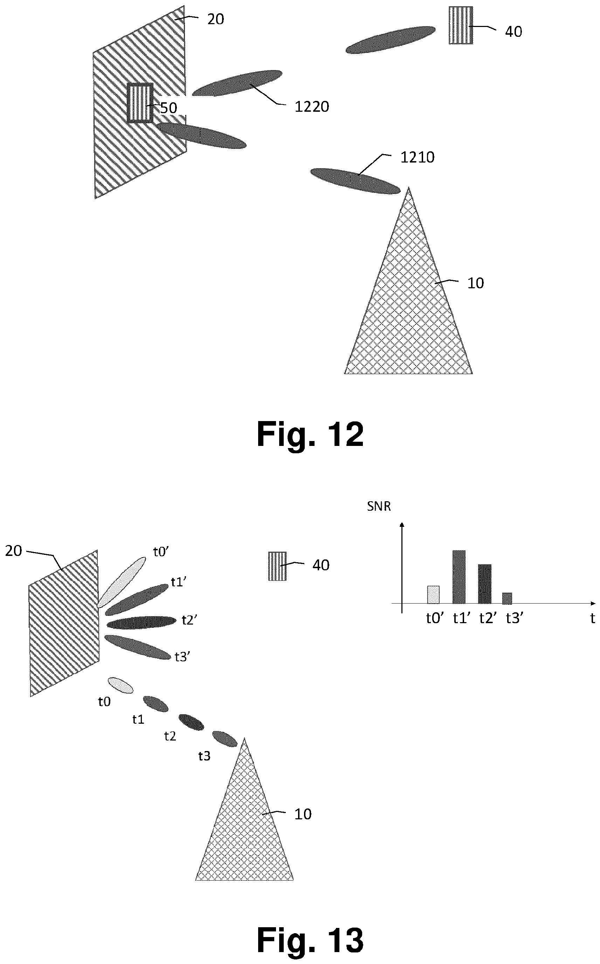

Fig. 12 schematically shows a first example of an improved beam steering process according to another embodiment.

In the first example, the RIS-UE 50 announces its RIS capabilities so that an UE 40 with bad connectivity can discover it. Alternatively, the UE 40 with bad connectivity can try to discover the RIS-UE 50 or other RIS-UEs. Once the RIS-UE 50 and the UE 40 have found each other, if authorized, the RIS-UE 50 and the UE 40 may establish a communication link e.g. via a PC5 interface and they can also identify their specific direction by pairing their beams. The RIS-UE 50 can then send this information (i.e, the beam direction towards the UE 50) to a controlling gNB 10. The gNB 10 knows where the RIS 20 of the RIS-UE 50 is located and in which direction it has to form its beam to reach it. Furthermore, the gNB 10 also knows now the location of the UE 40 respect to the RIS-UE 50, since the RIS-UE 50 just reported the beam direction from the RIS-UE 50 towards the UE 40. Thus, the gNB 10 can determine the configuration (i.e., reflection angle) of the RIS 20 to directly reach the UE 40. This is illustrated in Fig. 12 where the RIS configuration refers to a reflection angle as achieved e.g. by an orientation of the RIS 20 in space.

Fig. 13 schematically shows a second example of an improved beam steering process according to another embodiment.

In the second example, the gNB 10 sends system information (SI) towards the RIS 20, wherein the system information may be similar to synchronization signals of a physical broadcast channel (PBCH) used to broadcast basic system information within the cell of a cellular radio access network. The system information can include a primary synchronization signal (PSS), a secondary synchronization signal (SSS), and a master information block (MIB) broadcasted in the PBCH channel. To emulate different synchronization signal bursts or blocks (SSBs) used in 5G and broadcasted in different directions through different beams, the gNB 10 sends such RIS SSBs towards the RIS 20.

For instance, in Fig. 13, the gNB 10 has send four RIS SSBs at times t0, t1, t2, and t3 towards the RIS 20 using a single beam pointing towards the RIS 20. The gNB 10 may change the RIS state in synchronism with the time that the RIS SSBs reach the RIS 20 in such a way that the RIS SSBs are reflected/refracted in different directions as illustrated in Fig. 13, where at time t0' the RIS SSB is broadcasted using the highest beam direction, at time t1' the RIS SSB is broadcasted using the second highest beam, at time t2' the RIS SSB is broadcasted using the second lowest beam direction, and at time t3' the RIS SSB is broadcasted using the lowest beam direction.

When the UE 40 receives the RIS SSBs, the UE measures the signal-to-noise ratio (SNR) as illustrated in the time-dependent diagram on the right side of Fig. 13. This diagrams shows that the first SSB broadcasted at time t0' has been received with the second lowest SNR, the second SSB broadcasted at time t1' has been received with the highest SNR, the third SSB broadcasted at time t2' has been received with the second highest SNR, and the fourth SSB broadcasted at time t3' has been received with the lowest SNR. The UE 40 can select the SSB with the highest SNR to establish a communication link with the gNB 10 through the RIS 20. This can be achieved by assigning an individual parameter (e.g., time or frequency or preamble or code) to each of the beams and using this parameter for designating a beam during the initial random access procedure.

In an example, the gNB 10 can keep sending RIS SSBs towards the RIS 20 and the gNB 10 can keep switching the RIS state accordingly to keep emulating the synchronization signals. If the UE 40 moves, the UE 40 can inform the gNB 10 about the received SNR for each of the RIS SSBs so that the gNB 10 can adjust the RIS state accordingly to ensure a good connection between the gNB 10 and the UE 40 through the RIS 20. Note that the UE 40 may be able to differentiate SSBs before being reflected (times t0,...,t3 in Fig. 13) and after reflection (times t0',...,t3') because the SSBs before reflection will lead to an almost identical (uniform) SNR while the SSBs after reflection will exhibit a non-uniform SNR distribution.

In an example, the system information associated to the RIS 20, e.g., MIB or system information block (SIB1), may include information about the fact that the gNB 10 is transmitting this signal via the RIS 20. This can be, e.g., a single bit that can be either 0 or 1. The system information associated to the RIS 20 may also include information about the parent gNB 10 steering the RIS 20, e.g., it can include the physical cell identity (PCI) of the parent node. Such information can be used by the UE 40 to decide about joining/communicating through the RIS 20 or not.

In another embodiment, the RIS may comprise a sub-RIS. In an example, the RIS may be placed on the facade of a building, which represents a large surface. Then, the RIS may be divided into sub-RIS(s) that can be controlled individually.

In another embodiment, random access channel (RACH) enhancement can be achieved by coordinating a gNB with an RIS in such a way that the RIS broadcasts system Information. As in 5G, the RIS' SIB1 can include configuration parameters for operating the RACH. These parameters tell the UE which parameter (e.g., frequency or timing or preamble or code) it should use to connect to the gNB through a given RIS beam. This requires the gNB to configure the RIS during those RACH timeslots in such a way that a physical RACH (PRACH) sent by the UE towards the RIS is directed (reflected/refracted) towards the gNB.

In another embodiment, a channel state information (CSI) can be enhanced. In wireless communications, the CSI refers to known channel properties of a communication link. The CSI describes how a signal propagates from a transmitter to a receiver and represents the combined effect of, for example, scattering, fading, and power decay with distance, as obtained e.g. by a channel estimation process. The CSI makes it possible to adapt transmissions to current channel conditions, which is crucial for achieving reliable communication with high data rates e.g. in multiantenna systems.

Thus, CSI reference signals (CSI-RSs) may be used when the gNB transmits towards the UE to understand the channel properties and how good (or bad) the communication link is. The gNB may send CSI-RS and the UE receives these and reports their value. In an example, a CSI-RS may be sent every two resource block(s) (SSBs). The CSI-RS may be periodic, semipersistent or aperiodic (e.g., transmitted in a downlink control information (DCI) message).

In an example, zero-power CSI-RSs may be provided as time/frequency slots where the gNB informs the UE that nothing is transmitted. These slots can be used by the UE for interference management. Based on the received signals, the UE may select a most suitable precoding matrix for antenna steering for the gNB, e.g., by using given a codebook of precoding matrices. There may be two types of codebooks: type 1 is coarser (e.g. for single users) and type 2 is extensive (e.g. for multi-user multiple-input-multiple-output (MU-MIMO) systems). In the uplink direction, CSI may not be required, since the gNB can track the quality of the received signal and instruct the UE accordingly.

As an alternative option, sounding reference signals (SRSs) may be used in the present embodiment, instead of the CSI-RSs. SRSs are reference signals transmitted by the UE in the uplink direction and are used by the gNB to estimate the uplink channel quality over a wider bandwidth e.g. for scheduling purposes.

In the case of an RIS, the gNB may be interested in knowing the channel to the UE through the RIS.

In an example, an increased number of timeslots, e.g., n, may be allocated to transmit the CSI-RS when a UE connects through the RIS. For instance, n=3 slots. Although the reference signal may be identical at the transmission time for all n slots, the gNB may control the RIS in such a way that the RIS has slightly different reflection/refraction RIS coefficients in those n slots. For instance, for n=3, the first slot might use the reflection/refraction RIS coefficients and gNB-RIS beamforming that are currently considered as optimal, and for the other two slots slightly different reflection/refraction RIS coefficients and/or gNB-RIS beamforming may be used. The aim may be that the UE can help the gNB to identify in which direction (i.e., which reflection/refraction RIS coefficients) the RIS should be steered in order to keep a good connection and/or how the gNB beam should be steered towards the RIS.

The above procedure can be done for each resource block, or the configuration of beam/RIS might be slightly adapted for CSI-RSs transmitted in different resource blocks.

In another embodiment, interference coordination/mitigation may be achieved by reusing the RIS by multiple base stations (gNBs).

When a gNB uses the RIS, its range may be extended leading to a potential interference in another area. The gNB may inform a second gNB about its wish to use the RIS including the desired area of coverage, frequency and/or timing. This can be done e.g. through the Xn control plane interface between gNBs as defined by 3GPP. The second gNB can confirm/deny this usage.

A UE connected to the second gNB may measure a given interference level caused by the RIS that is currently controlled by a first gNB. The UE can inform the second gNB about the interference level, and the origin. The origin can be indicated if the gNB sends a CSI-RS linked to the RIS with its identifier. The second gNB can then use the Xn control plane interface to inform the first gNB.

In another embodiment, a smart repeater interface can be based on the proposed system and method.

RF repeaters are devices that "repeat" the signal received from a gNB, thereby extending its range. A preliminary evaluation indicate that performance improvement can be achieved by adding side control information (on/off, timing, spatial Tx/Rx). In that sense, smart repeaters may not just include the RF layer of a gNB, but also the PHY layer for the control plane. The gNB can then steer the smart repeater with parameters such as the timing configuration (UL/DL), beamforming, or on/off.

The steering capabilities of a smart repeater and an RIS are expected to be similar. As already discussed above, the gNB can command the RIS to setup a given reflection pattern for a given period. This is similar to configuring the beamforming in smart repeaters. The gNB can control the RIS for some time slots, which is similar to providing a given timing configuration to a smart repeater. Furthermore, the RIS is by default off, and thus, it only operates when the gNB is using it.

From this point of view, the above embodiments may also be implemented in connection with smart repeaters or a combination of RISs and smart repeaters.

In another embodiment, a safer way for RIS random state cycling is provided. As proposes above, the states of the RIS may randomly change to prevent users from using the RIS without paying. However, this does not prevent an attacker from using it to cause randomized interferences in the environment by pointing a malicious beam against the RIS.

This problem can be solved by configuring the RIS to redirect incident waves or beams, independently of the incident direction, towards a direction where they do not cause damage/interference, e.g., the basement of building, or by configuring the RIS as metamaterial absorber.

In another embodiment, the RIS switching time (latency) may be taken into account. As described earlier, the gNB may send a command to the RIS to set it in a given configuration and may then send the corresponding data to be reflected/refracted by the RIS towards a target UE.

This procedure involves a certain latency which depends on the time required by the control message (command) to reach the RIS, plus the time required by the RIS to change its state in response to the control message (command). An estimation of this latency depends on the questions whether the RIS operates in accordance with a clock and whether it is synchronized with the gNB.

The gNB may be configured with the switching time of the RIS. The switching time of the RIS is thus a parameter that may be sent to the gNB or retrieved from a configuration database, or from RIS metadata.

The propagation delay between the gNB and the RIS is also a parameter that can be learned or configured, in particular, if the RIS does not have a clock or the RIS is not synchronized with the gNB. This parameter may be related to a time of advance associated to the RIS-UE connection and can be derived from it. Once the gNB knows it, the gNB can send user plane messages early enough to achieve a desired timing of the RIS states that have been configured by means of control messages. For instance, the gNB may send control messages (e.g., DCI messages) indicating the requested RIS states and shortly afterwards send the user plane messages for the UE.

In an example, the RIS may be equipped with a clock which is synchronized with the clock of the gNB. If this is done, then the gNB can schedule some given states at some given timing resources, e.g., a subframe, a timeslot, etc. If the RIS has a clock and the clock is synchronized, the gNB can send scheduling requests in advance and only needs to focus on the sending time of the user plane messages so that they arrive at the RIS when it is at a given state.

In an example, the RIS may be equipped with a clock which is synchronized with the clock of the gNB except a fixed time of advanced (ToA), i.e., the clock of the RIS equals the timing of the clock of the gNB plus ToA. The ToA equals the distance between gNB and RIS times the speed of light. This ensures that uplink transmissions will arrive simultaneously at the gNB independently whether they are sent directly to the gNB or through the RIS.

In case the RIS serves multiple gNBs, it may remain clock-synchronized to multiple (N) gNBs at the same time, for example up to N=2 or N=4. Then, when it receives e.g. instructions/reservations from a first gNB it applies the instructions/reservations relative to the synchronized clock of the first gNB and similar for other gNBs.

In another embodiment, a timing advance adjustment may be applied. Timing advance is a special command (notification) in LTE and 5G NR that enables a UE to adjust its uplink transmission (e.g., physical uplink shared channel (PUSCH), physical uplink control channel PUCCH, SRS etc.), so that messages transmitted by multiple UEs reach the gNB in a synchronized way, i.e., without mutually interfering at symbol/slot boundaries.

A gNB that is receiving an uplink transmission from a UE directly in LoS and needs to switch to a new configuration where this transmission is received via an RIS, can configure a lower timing advance value to compensate for the longer transmission path length via the RIS in case this indirect path length is substantially longer than the LoS path. Vice versa, when switching from an RIS path to a direct/LoS path, the timing advance value can be increased again.

The timing advance value may be communicated during random access via the RACH channel. In particular, the UE may extract the timing advance value from the RACH response. The timing advance field in this RACH response message or any other suitable response message may be 12 bits long. Afterwards, the UE can adjust it e.g. via a timing advance control element (CE) of the Media Access Control (MAC) protocol, where the timing advance CE field is 6 bits long. If an RIS (or smart repeater) acts as a simple RF repeater, the UE might consider that the gNB and the RIS have the same timing advance, since there is a single PCI and, e.g., the *ServingCellConfigCommon* structure has a single field for the timing advance. This can lead to a non-optimal performance and can be improved by having two or more timing advance values, each of them linked to one or more beams in the cell.

An alternative option to minimize changes is that a gNB steers an RIS to act as a standalone gNB DU with its own PCI. In this way, a UE would perceive two different DUs and can apply different timing advance values to each of them. The timing advance values applied to UEs connected to an RIS may be be smaller than they should actually be if the RIS were an actual gNB, similar to the embodiment of Fig. 13. The reason is that the timing advance value depends on the distances between the UE and the RIS and between the RIS and the gNB, while if the RIS were a gNB, the timing advance would only depend on the distance between the UE and the RIS.

The fact that the timing advance of the gNB and the RIS are related can also be used to better configure this value for both gNB and RIS since the gNB knows that the distance between the gNB and the UE over the RIS is always greater than the distance between the gNB and the UE. The gNB may also know that if the distance between the gNB and the UE decreases, then the distance between the gNB and the UE over the RIS will increase. This information can be used to improve the estimation of the required timing advance of one link based on the knowledge of the timing advance for the other link.

Another consideration may be that with RIS, and smart repeaters, the distance between the UE and the gNB is likely to increase, and thus it can be expected that the timing advance fields of the RACH response and the MAC CE require more bits.

In another embodiment, the RIS state may be commanded by the gNB using physical downlink control channel (PDCCH) messages or signals (such as DCI) to send configuration information to a particular RIS to command a state change.

Initially, a working relation between the RIS and the gNB could be negotiated as described in other embodiments. Once the relation is set up for some time period, the gNB can signal via a PDCCH message or signal the desired RIS surface adjustments and/or state changes in a similar way as scheduling information is sent to UEs. In particular, a new DCI format can be defined for RIS use. Multiple RIS's can be commanded in this way, wherein they can be distinguished by an identifier (e.g. a radio network temporary identity (RNTI)) contained in the PDCCH transmission of the gNB.

Optionally, transmission security via the PDCCH channel can be increased by including a message integrity code (MIC) in each message, for example a cryptographic cyclic redundancy code (CRC) or the like. Up to 164 bits in total are available for the example case of DCI, including CRC.

Another consideration refers to the fact that in above embodiments a gNB is capable of using an RIS to communicate with a UE at a time. However, existing gNBs are able of MIMO operation by using multiple beams. In some scenarios it is desired to control an RIS capable of handling multiple beams simultaneously. This can be done when the RIS behaves differently depending on the properties of the incident electromagnetic (EM) wave, e.g., depending on the frequency, polarization, etc. For such an RIS, it is possible for the gNB to control the RIS so that the reflection/refraction angle depends on the EM properties of the incident wave so that the gNB can communicate with two different UEs simultaneously through the same RIS. The procedure may be as follows: 1) the gNB sets the RIS at a given state at a given period of time, the state referring to refraction/reflection properties that depend on certain properties of the incident EM wave (e.g., frequency, polarization, etc); 2) the gNB transmits two or more beams towards the RIS, each of the beams featured by specific properties (e.g., frequency, polarization, etc) that are handled differently by the current RIS state so that the beams are split at the RIS. In this procedure, the RIS state is such that the gNB will reach two or more UEs, at different locations, simultaneously, when sending two or more beams towards the RIS since the two or more beams sent from the gNB to the UEs through the RIS will be reflected/refracted differently by the RIS. Similar behavior is applicable to a smart repeater.

To summarize, a system and method for determining and controlling a reconfigurable relay device (e.g., a reconfigurable intelligent surface, RIS, or a smart repeater) have been described, wherein the reconfigurable relay device is registered and a wireless communication path is established from a network (e.g. access device) via the reconfigurable relay device to a terminal device. The network registers the reconfigurable relay device and determines parameters needed for its control. The control may be achieved by validated and accepted commands and queries. A relay state of the relay device may be set so that a beam for the wireless communication path is correctly redirected at the terminal device.

While the invention has been illustrated and described in detail in the drawings and foregoing description, such illustration and description are to be considered illustrative or exemplary and not restrictive. The invention is not limited to the disclosed embodiments. It can be applied to various types of UEs or terminal devices, such as mobile phone, vital signs monitoring/telemetry devices, smartwatches, detectors, vehicles (for vehicle-to-vehicle (V2V) communication or more general vehicle-to-everything (V2X) communication), V2X devices, Internet of Things (IoT) hubs, IoT devices, including low-power medical sensors for health monitoring, medical (emergency) diagnosis and treatment devices, for hospital use or first-responder use, virtual reality (VR) headsets, etc.

The BS may be any network access device (such as a base station, Node B (eNB, eNodeB, gNB, gNodeB, ng-eNB, etc.), access point or the like) that provides a geographical service area.

The RIS may be created by use of smart devices (e.g., a smart TV or a smart Infrared panel) with hardware components (e.g., a large glass screen or panel) which could be regarded as a good reflector. The RIS may also be embedded into an object such as a billboard, building façade, poster, floor tile, roof, wall, etc. Furthermore, in the above embodiments, the RIS may be replaced by a smart repeater or RF repeater or any relay device with a controllable relay or reflection function.

Furthermore, at least some of the above embodiments may be implemented to provide network equipment for 5G/6G/xG cellular networks or a new product class of (low-cost/mid-cost) reconfigurable intelligent surfaces to improve coverage, reliability and speed of cellular networks.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. The foregoing description details certain embodiments of the invention. It will be appreciated, however, that no matter how detailed the foregoing appears in the text, the invention may be practiced in many ways, and is therefore not limited to the embodiments disclosed. It should be noted that the use of particular terminology when describing certain features or aspects of the invention should not be taken to imply that the terminology is being re-defined herein to be restricted to include any specific characteristics of the features or aspects of the invention with which that terminology is associated.

The described operations like those indicated in Figs. 2 and 11 can be implemented as program code means of a computer program and/or as dedicated hardware of the related network device or function, respectively. The computer program may be stored and/or distributed on a suitable medium, such as an optical storage medium or a solid-state medium, supplied together with or as part of other hardware, but may also be distributed in other forms, such as via the Internet or other wired or wireless telecommunication systems.

## Claims

1. An apparatus for controlling a communication path in a wireless network, the apparatus comprising:
a registration controller (140) for discovering and registering a reconfigurable relay device (20) in the wireless network;
a path establisher (130) for planning and establishing a wireless communication path to at least one target terminal device (40) via at least one registered reconfigurable relay device (20); and
a state controller (110) for controlling a redirection pattern of the at least one reconfigurable relay device (20) in accordance with the established wireless communication path.

2. The apparatus of claim 1, wherein the registration controller (140) is configured to look up the reconfigurable relay device (20) in a relay installation database (30) and query a required registration method from the relay installation database (30) or the reconfigurable relay device (20), or by using autodiscovery of the reconfigurable relay device (20) in a locality method where local transmission paths with variable properties are noted.

3. The apparatus of claim 1, wherein the path establisher (130) is configured to apply a transmission modelling within a local radio transmission model of a local environment to search for suitable beam paths, or to use results of previous beam directions plus relay states and UE locations stored in a database (1320), or to use of an artificial intelligence model for learning a relation or association between beam settings and parameters, relay states of nearby reconfigurable relay devices and/or UE location(s) as input parameters and link quality and/or performance to the target terminal device (40) as output parameters.

4. The apparatus of claim 1, wherein the state controller (110) is configured to control the redirection pattern applied to at least one beam on the wireless communication path by using a scheduling request.

5. The apparatus of claim 1, wherein the path establisher (130) is configured to apply a timing advance to compensate for a longer transmission path length via the reconfigurable relay device (20).

6. The apparatus of claim 1, wherein the path establisher (130) is configured to query the reconfigurable relay device (20) to determine a current configuration state.

7. A reconfigurable relay device (20) configured to control a redirection pattern for relaying at least one received wireless signal in response to a relay state command received from a remote controller device (10) of a wireless network to establish a wireless communication path to a target terminal device (40), wherein the reconfigurable relay device (20) can be set to one of a plurality of configuration states in response to the relay state command, wherein each of the configuration states results in one of a plurality of redirection patterns of the received wireless signal, and wherein the plurality of redirection patterns comprise at least one of a reflection with a given reflection angle, a focusing or defocusing, a generation of multiple beams, a refraction with a given refraction angle, and an absorption.

8. The reconfigurable relay device (20) of claim 7, wherein the reconfigurable relay device (20) is a reconfigurable intelligent surface or other switchable metamaterial surface or a smart repeater.

9. The reconfigurable relay device (20) of claim 7, comprising metadata (220) including at least one of information required for deriving capabilities of the reconfigurable relay device (20) and its control by a network, location and/or orientation information, a set of configuration states, a default configuration state, a reconfiguration speed, authentication, control and query methods, and a network control prioritization procedure.

10. The reconfigurable relay device (20) of claim 7, comprising current information data (230) including at least one of a current relay state indicating a currently set configuration state, a current user priority parameter which is set to a priority of a current user, a first flag indicating if the current relay state is being currently commanded, a timer value indicating for how long the current relay state has been commanded, and a second flag indicating an out of operation state.

11. The reconfigurable relay device (20) of claim 7, comprising a priority list for storing priorities of networks or devices that control the reconfigurable relay device (20), wherein the reconfigurable relay device (20) is configured to compare a new priority of a new remote controller or a new controlling network with a current priority of a current remote controller or a currently controlling network and if the new priority is higher, the reconfigurable relay device (20) ceases the control by the current remote controller or current network and allows control by the new remote controller or new network.

12. The reconfigurable relay device (20) of claim 7, comprising a scheduler (260) for scheduling configuration states requested by one or more networks or devices and for determining whether a requested configuration state can be accepted or not.

13. The reconfigurable relay device (20) of claim 7, wherein the reconfigurable relay device (20) is configured to provide a random state cycling where configuration states are randomly changed, or to redirect incident waves or beams towards a predetermined fixed direction, or to enter a configuring state as a metamaterial absorber.

14. A system comprising at least one access device (10) including an apparatus as claimed in claim 1, at least one reconfigurable relay device (20) as claimed in claim 7, and a relay installation database (30) for storing information about installed reconfigurable relay devices (20).

15. A method of controlling a communication path in a wireless network, the method comprising:
discovering and registering a reconfigurable relay device (20) in the wireless network;
planning and establishing a wireless communication path to at least one target terminal device (40) via at least one registered reconfigurable relay device (20); and
controlling a redirection pattern of the at least one reconfigurable relay device (20) in accordance with the established wireless communication path.
